# EUROPEAN PATENT SPECIFICATION

(11) **EP 4 122 423 B1**
(45) Date of publication and mention of the grant of the patent: **22.05.2024**
(21) Application number: 22186553.8
(22) Date of filing: 22.07.2022
(51) Int. Cl.: A61C 15/00, A61C 17/22, A61C 17/34, A46B 9/04

(54) **DENTAL CLEANING DEVICE**
DENTALREINIGUNGSGERÄT
DISPOSITIF DE NETTOYAGE DENTAIRE

(30) Priority: 22.07.2021 IT 202100019532
(43) Date of publication of application: 25.01.2023
(73) Proprietor: Studio Guasti - Massai Odontoiatri S.S., 50121 Firenze (FI) (IT)
(72) Inventor: GUASTI, Alessandro, 50019 Sesto Fiorentino (FI) (IT); MASSAI, Lorenzo, 59100 Prato (PO) (IT); OSTUNI, Alessandro, 50053 Empoli (IT); ROSSI, Luca, 56028 San Miniato (PI) (IT); SANTARELLI, Luca, 51039 Quarrata (PI) (IT)
(74) Representative: Gallo, Luca

(56) References cited:
- WO-A1-98/36703
- JP-A- H07 163 420
- US-A1- 2019 142 150

## Description

### Field of application

The present invention regards an electrical device for dental cleaning.

The present device is intended to be advantageously employed by a user in order to carry out operations of dental and/or interdental cleaning in an automated manner, preferably in complete autonomy and without the aid of a dentist.

More in detail, the device, object of the present invention, is advantageously employable in a daily context, for the daily dental cleaning of a user outside of a dental office.

The invention is therefore inserted in the field of production of devices for personal hygiene and in particular dental or interdental devices.

### State of the art

Known in the market are devices for dental cleaning and/or interdental cleaning which are employable by a user in order to carry out operations of dental and/or interdental cleaning in autonomy, outside of the normal period controls to be carried out within a specialized office.

The aforesaid devices are of manual type, and therefore require the user himself/herself to move the devices within the mouth, in particular between the teeth, during the cleaning operations.

The devices for dental cleaning of manual type are also known in the technical jargon of the field with the term "interdental brush" and can be substantially of two types.

More in detail, a first type consists of an interdental brush provided with a handle made of plastic material on which a thread-like element is mounted that is usually made of metallic material. A plurality of bristles are fixed on the thread-like element, radially projecting from the latter, which are made of polymer material and are distributed along the entire length of the same thread-like element.

The second type consists of an interdental brush which is made entirely of plastic material, preferably silicone and in which the handle, the thread-like element and the bristles are made in a single body.

More in detail, in such case the thread-like element is extended from an end portion of the handle, tapered to a terminal end thereof, and the bristles are attained by means of radial protuberances, which are extended along the entire circumference of the thread-like element.

In operation, therefore, the user grips the handle of the interdental brush and places the thread-like element in proximity to the teeth or in the interspace between two adjacent teeth and moves the interdental brush orthogonally with respect to the teeth in order to carry out a cleaning operation with the bristles (or the radial protuberances) on the thread-like element.

Such solutions of devices have in practice shown that they do not lack drawbacks.

The main drawback lies in the fact that the aforesaid solutions of devices, being of manual type, require user to move the interdental brush in order to attain the operations of dental cleaning.

This - in addition to being tiring for the user - does not ensure the uniformity of the cleaning operations between one tooth and the next and between two different cleaning operations.

In particular, the movement of the user and the force applied thereby for cleaning are not regular during the treatment and in particular they tend to become less uniform and accurate towards the end of the treatment itself. This causes therefore an irregularity in the dental and/or interdental cleaning.

For the purpose of at least partially resolving the aforesaid drawbacks of the prior art, electrical devices for dental cleaning have been developed which comprise a support body, defining at its interior a first containment volume in which an electric motor is housed, placed within the first containment volume of the support body and comprising a rotor shaft, which rotates around a rotation axis.

The aforesaid electrical devices also comprise a interdental brush, mounted at one end of the support body and mechanically connected to a transmission member, in order to be rotated. The aforesaid rotation of the rotor shaft can be of continuous type, therefore determining a continuous rotation also of the interdental brush, or oscillatory rotation, therefore determining a vibrational oscillatory movement of the interdental brush.

The interdental brush can be rotated around an axis which can be parallel or transverse with respect to the rotation axis around which the rotor shaft rotates, as a function of the tilt the interdental brush and the support body.

However, also such solution of electrical device has in practice shown that it does not lack drawbacks. The main drawback lies in the fact that also such device requires the user to move the interdental brush in order to attain the operations of dental cleaning.

Therefore, also such electrical device does not ensure the uniformity of the dental and/or interdental cleaning for the same reasons described above.

More in detail, the aforesaid electrical devices for dental cleaning are unable to ensure the complete removal of the bacterial plaque, which is tenaciously attached to the teeth and to the roots in the inter-proximal spaces.

The documents WO 98/36703 and JP H07163420 describes two examples of electrical devices for dental cleaning in which the interdental brush is actuated by means of an eccentric kinematic mechanism. Also such solutions of known type, nevertheless, do not lack drawbacks, since for example they are not easily insertable in the mouth during use.

### Presentation of the invention

In this situation, the problem underlying the present invention is therefore that of overcoming the drawbacks manifested by the devices for dental cleaning of known type, by providing an electrical device for dental cleaning which allows carrying out operations of dental cleaning in an automated manner, without requiring manual movements by the user.

A further object of the present invention is to provide an electrical device for dental cleaning which allows rendering uniform the treatments of dental cleaning during the entire treatment and also between two different treatments.

A further object of the present invention is to provide an electrical device for dental cleaning which allows completely removing the bacterial plaque attached to the teeth and in particular at the roots of the latter in the inter-proximal spaces.

A further object of the present invention is to provide an electrical device for dental cleaning which is capable of stopping their movement if pressed with force against a part of the mouth of a user.

A further object of the present invention is to provide an electrical device for dental cleaning which is simple and inexpensive to be attained.

A further object of the present invention is to provide an electrical device for dental cleaning which are entirely efficient and reliable.

### Brief description of the drawings

The technical characteristics of the invention, according to the aforesaid objects, can be clearly seen in the contents of the below-reported claims and the advantages thereof will be more evident in the following detailed description, made with reference to the enclosed drawings, which represent a merely exemplifying and non-limiting embodiment of the invention, in which:
- Fig. 1 shows a perspective view of an electrical device for dental cleaning in accordance with the present invention;

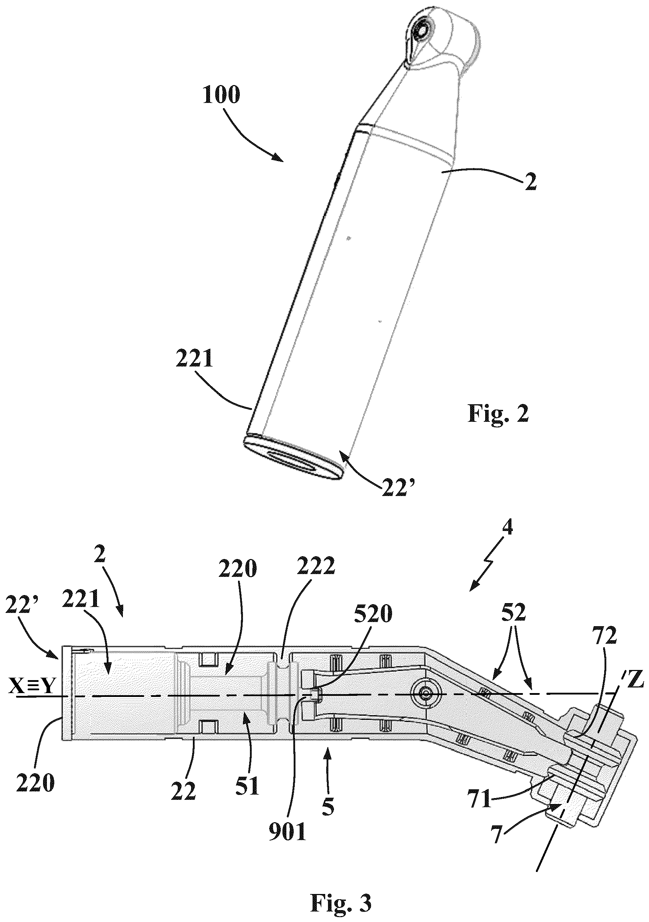

- Fig. 2 shows a detail of the electrical device of figure 1, relative to a dental cleaning head;
- Fig. 3 shows a side view of the dental cleaning head of figure 2, with a support body transparent in order to better show the parts at the interior;
- Fig. 4 shows a side section view of the dental cleaning head of figure 3;
- Fig. 5 shows a section view of a detail of the dental cleaning head of figure 3, relative to a drive shaft engaged with an eccentric element;
- Fig. 6 shows a detail of the dental cleaning head of figure 3, relative to a head portion of the support body with a coupling body on which a interdental brush is mounted;

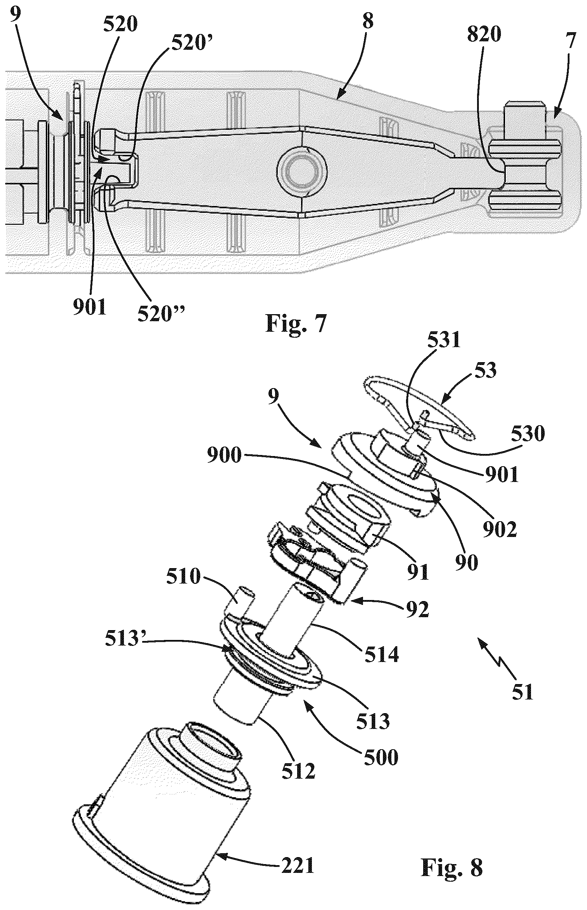

- Fig. 7 shows a side view of a dental cleaning group, in accordance with a first embodiment;
- Fig. 8 shows gear ratio reduction means of the dental cleaning group, represented in exploded view, in accordance with the first embodiment;

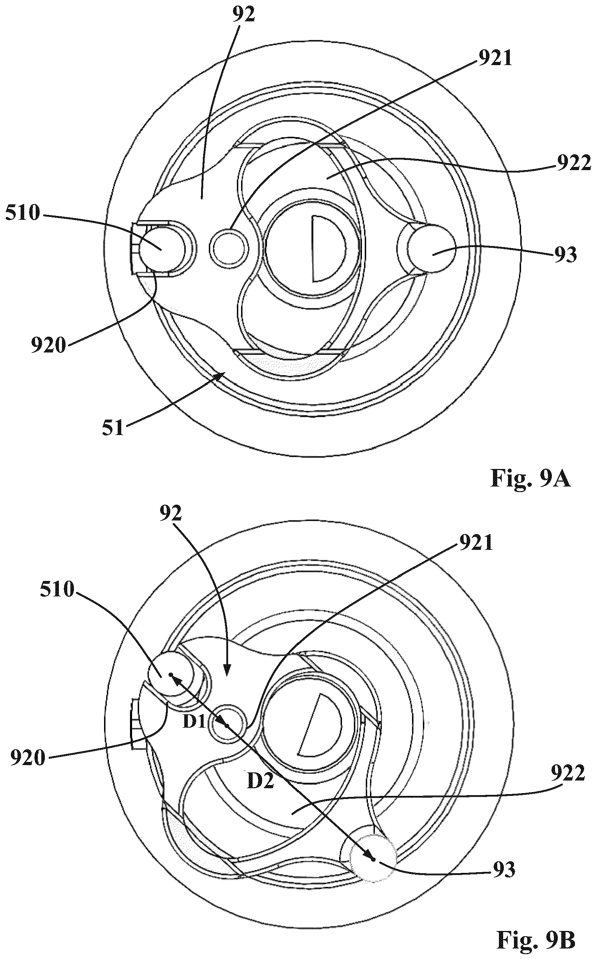

- Fig. 9A shows a top view of the gear ratio reduction means of figure 8, with a reducer body in a non-rotated position;
- Fig. 9B shows a top view of the gear ratio reduction means of figure 8, with a reducer body in a rotated position;

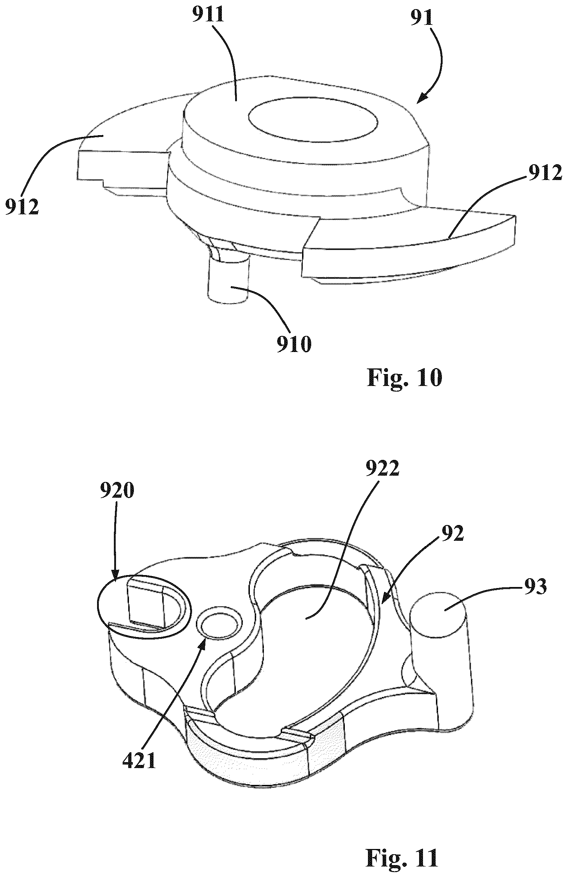

- Fig. 10 shows a detail of the gear ratio reduction means of figure 8, relative to an support element;
- Fig. 11 shows a detail of the gear ratio reduction means of figure 8, relative to the reducer body;
- Fig. 12 shows a section view of the gear ratio reduction means of figure 8.

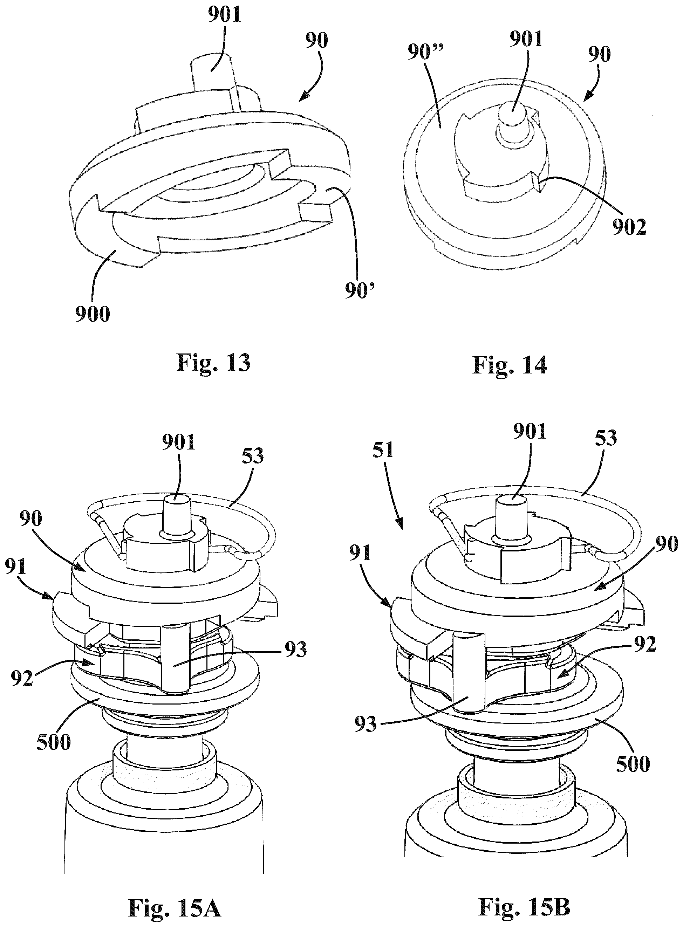

- Fig. 13 shows a bottom perspective view of a detail of the gear ratio reduction means of figure 8, relative to a toothed wheel;
- Fig. 14 shows a top perspective view of a detail of the gear ratio reduction means of figure 8, relative to a toothed wheel;
- Figs. 15A and 15B show a perspective view of the gear ratio reduction means of figure 8, respectively with an engagement element engaged with transmission teeth of the toothed wheel and with the engagement element disengaged by the transmission teeth of the toothed wheel;
- Fig. 16 shows a detail of the gear ratio reduction means of figure 8, relative to an stopping element engaged with blocking teeth of the toothed wheel;
- Fig. 17 shows a section view of the gear ratio reduction means, in accordance with a variant of the first embodiment;
- Fig. 18 shows a perspective view of the gear ratio reduction means of figure 15;
- Fig. 19 shows an exploded view of the gear ratio reduction means in accordance with a second embodiment;

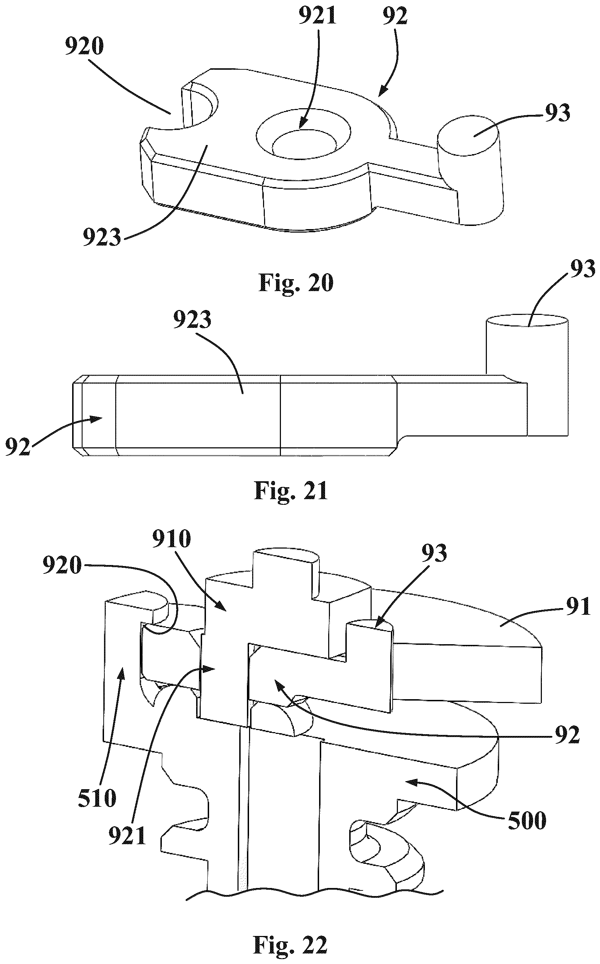

- Fig. 20 shows a perspective view of a detail of the gear ratio reduction means of figure 19, relative to the reducer body;
- Fig. 21 shows a side view of the reducer body of figure 20;
- Fig. 22 shows a section view of the gear ratio reduction means of figure 19;
- Fig. 23 shows an exploded view of the gear ratio reduction means in accordance with a third embodiment;
- Fig. 24 shows an exploded view of the gear ratio reduction means in accordance with a fourth embodiment;
- Fig. 25 shows a detail of the gear ratio reduction means of figure 24;
- Fig. 26 shows a section view of a detail of the gear ratio reduction means of figure 24;
- Fig. 27 shows an exploded view of the gear ratio reduction means in accordance with a variant of the fourth embodiment of figure 24;
- Fig. 28 shows an exploded view of the gear ratio reduction means in accordance with a fifth embodiment;

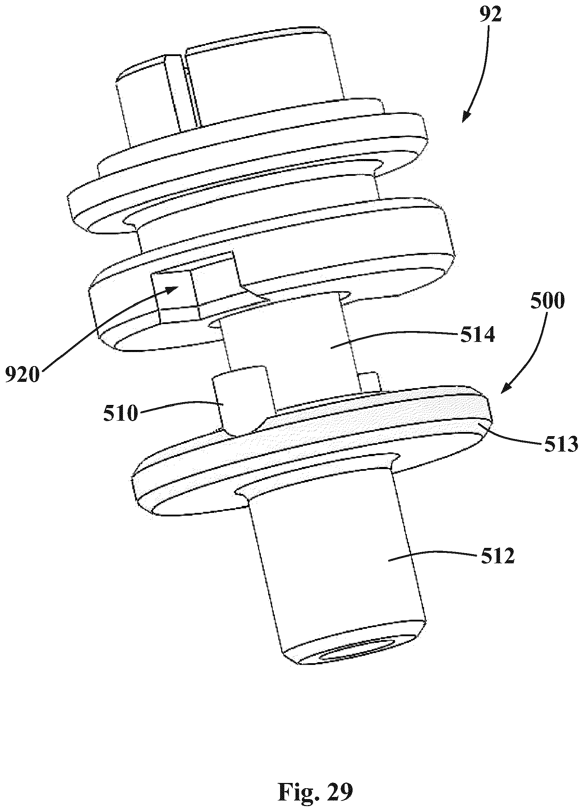

- Fig. 29 shows a detail of the gear ratio reduction means of figure 28, relative to the coupling between the reducer body and the eccentric element;
- Fig. 30 shows a top section view of the gear ratio reduction means of figure 28;
- Fig. 31 shows a detail of the gear ratio reduction means of figure 26, relative to the stopping element;
- Fig. 32 shows a detail of a transmission member, relative to a rocker arm and to a first and to a second lever arm;
- Fig. 33 shows a detail of figure 32, relative to a slit and to a coupling tooth;

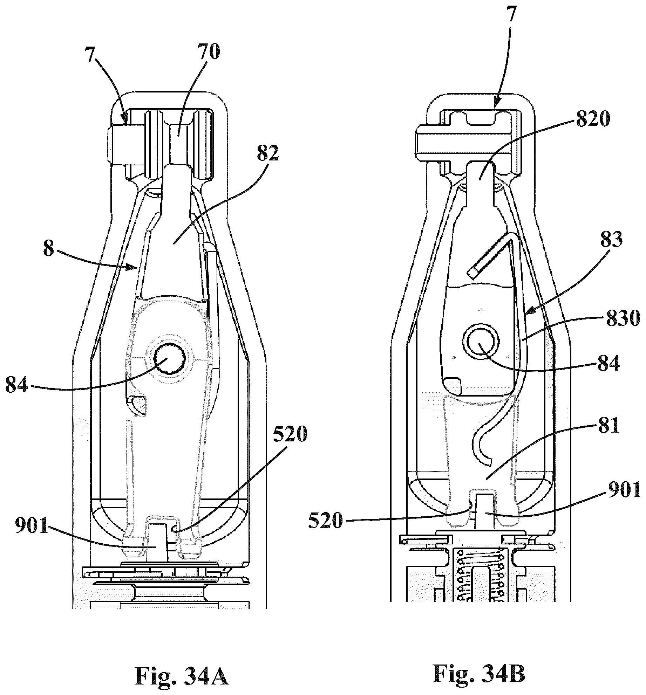

- Fig. 34A shows the rocker arm of figure 32 in a configuration in which the two lever arms are integral with each other;
- Fig. 34B shows the rocker arm of figure 32 in a configuration in which the two lever arms are integral with each other and in which the two arms are sectioned in order to show a return spring;

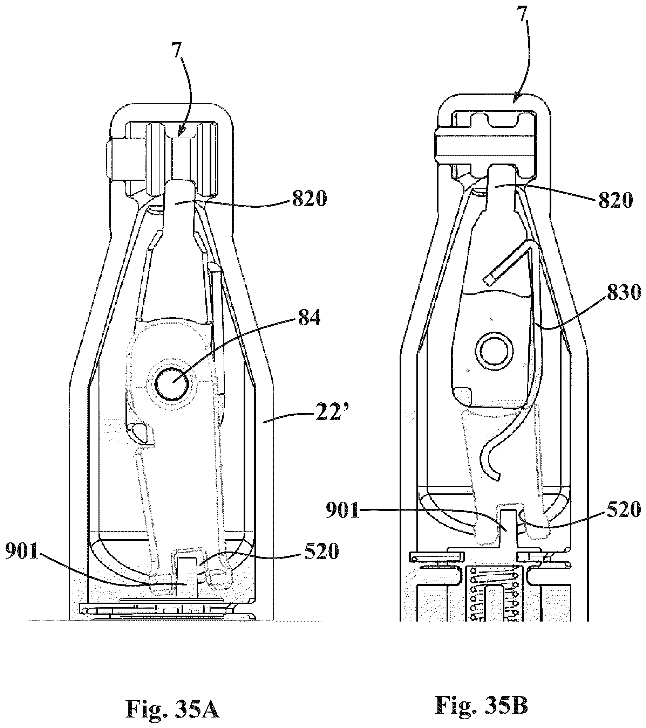

- Fig. 35A shows the rocker arm of figure 32 in a configuration in which the two lever arms are disengaged from each other;
- Fig. 35B shows the rocker arm of figure 32 in a configuration in which the two lever arms are disengaged with each other and in which the two arms are sectioned in order to show a return spring;
- Fig. 36 shows a detail of the gear ratio reduction means of figure 8, in which the engagement element and the transmission teeth are shaped tilted;
- Fig. 37 shows an embodiment variant of the rocker arm of figure 32, in which the second lever arm is provided with a reduced section;
- Fig. 38 shows a further embodiment variant of the rocker arm of figure 32, in which the first and the secondo arm are provided with respective friction faces;
- Fig. 39 shows an exploded view of the gear ratio reduction means in accordance with a sixth embodiment;

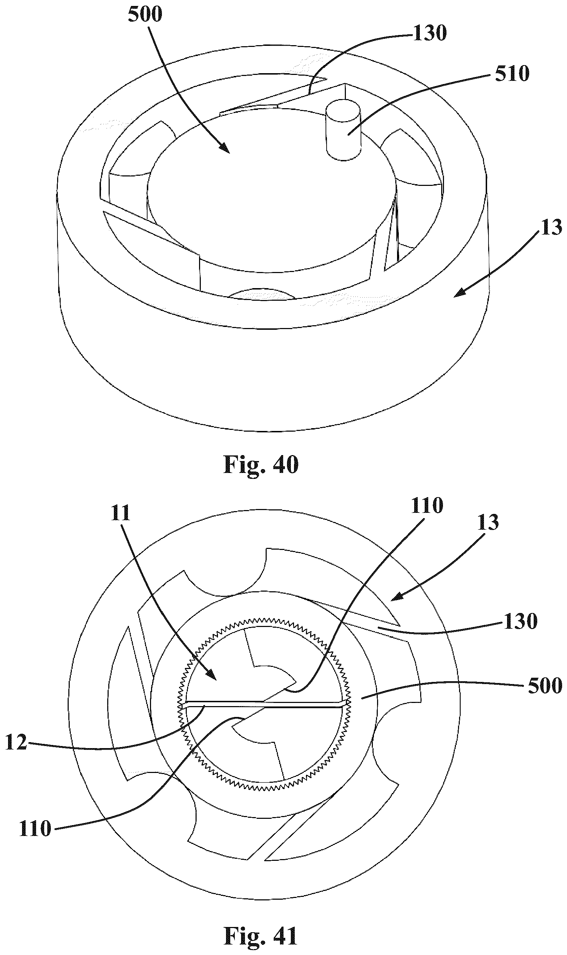

- Fig. 40 shows a perspective view of the gear ratio reduction means of figure 39 assembled;
- Fig. 41 shows a top plan view, in section, of the gear ratio reduction means of figure 38.

### Detailed description of a preferred embodiment

With reference to the enclosed drawings, reference number 1 overall indicates an electrical device for dental cleaning according to the present invention.

The device 1 according to the invention, during use, is advantageously intended to allow a user to autonomously execute an automated treatment of dental and/or interdental cleaning, in which therefore the movement to be carried out between the teeth by means of an interdental brush is automatic and does not require any effort by the user himself/herself.

Advantageously, with the term "interdental brush" it will be intended hereinbelow a tool for interdental cleaning, which can comprise a central thread-like element, made for example of metallic material, provided with a plurality of bristles extended radially projecting from the aforesaid thread-like element. Alternatively, the aforesaid interdental brush can be provided with a central element, preferably tapered towards the tip end thereof, made of polymer material, e.g. silicone, from which radial protuberances are extended in a single body in order to aid the interdental cleaning.

In accordance with the invention the electrical device for dental cleaning 1 comprises a support body 2, extended along a main extension direction Y and defining at its interior a first containment volume, an electric motor, placed within the first containment volume of the support body 2 and comprising a rotor shaft 31, actuatable to rotate around a first rotation axis X.

More in detail, the electric motor is advantageously an oscillating motor, arranged in order to move the rotor shaft 31 with an oscillating rotary motion, in a first rotation sense and in a second rotation sense. Advantageously the rotor shaft 31 oscillates around the first rotation axis X between two positions which are angularly spaced from each other by an angle preferably comprised between 80° and 10°, and still more preferably substantially equal to 40°.

Advantageously the rotor shaft 31 is extended up to a free end 31' thereof, which is preferably tapered and is also preferably provided with a first substantially flat wall, which defines a first anti-rotational surface.

In accordance with the idea underlying the present invention the electrical device for dental cleaning 1 comprises a dental cleaning group 4, which comprises an interdental brush 6, connected to the rotor shaft 31 in order to be moved by an oscillatory rectilinear motion along a to-and-fro direction Z, preferably transverse with respect to the rotation axis X. The dental cleaning group 4 also comprises motion transformation means 5, housed in the support body 2 and mechanically connected to the rotor shaft 31 and to the interdental brush 6 in order to transform the rotary motion of the electric motor into an oscillatory rectilinear motion of the interdental brush 6.

Advantageously the support body 2 comprises a first containment shell 21, which defines at its interior the aforesaid first containment volume and within which the electric motor is housed, and a second containment shell 22, mounted on the first containment shell 21 and defining a second containment volume 220, within which the dental cleaning group 4 is housed.

Of course, without departing from the protective scope of the present invention, the first and the second containment shell 21, 22 can be attained in a single body and therefore define two separate containment volumes or a single common containment volume, in which the electric motor and the dental cleaning group 4 are housed.

More in detail, in accordance with the preferred embodiments illustrated in the enclosed figures in which the support body 2 comprises two containment shells 21, 22, the first containment shell 21 has a preferably elongated shape and is extended between a bottom end 21" thereof, which preferably coincides with the bottom end of the support body 2, up to a top end 21' thereof. In particular, at the aforesaid top end 21', at least one through opening 210 is advantageously made, at least partially traversed by the rotor shaft 31 and in particular by the free end 31' of the rotor shaft 31.

Advantageously at the bottom end 21" of the first containment shell 21, a longitudinal housing, not illustrated, is attained which is susceptible of housing a plug of a recharge base, of the type well-known to the man skilled in the art and therefore not described in detail hereinbelow.

In accordance with the aforesaid first embodiment the support body 2 also comprises a second containment shell 22, which is advantageously removably mounted on the first containment shell 21, preferably by means of shape coupling, and defines a second containment volume 220 within which the dental cleaning group 4 is housed.

More in detail, the first containment shell 21 is provided, at the top end 21' thereof, with a first coupling element 211 which is extended along a direction parallel to the main extension direction Y and has preferably polygonal external shape and more generally non-circular, so as to be provided with at least one anti-rotational engagement wall. In addition, the second containment shell 22 is advantageously provided, at a base end 22' thereof, with a second through opening 220, at least partially traversed by the rotor shaft 31, in particular by its free end 31', and by the first coupling element 211 of the first containment shell 21.

The second through opening 220 of the second containment shell 22 is advantageously counter-shaped with respect to the first coupling element 211 of the first containment shell 21 in order to be connected with the latter by means of shape coupling and render integral in rotation the first containment shell 21 and the second containment shell 22.

Of course, without departing from the protective scope of the present invention the first coupling element 211 can be obtained on the second containment shell 22 and be counter-shaped to the first through opening 210 obtained on the first containment shell 21.

Advantageously, the second containment shell 22 comprises a coupling bush 221, preferably with substantially cylindrical shape, which is placed at the base end 22', is provided with the aforesaid second through opening 220 and supports the rotor shaft 31 of the electric motor in order to render it more stable during its movement.

The motion transformation means 5 comprise at least one eccentric device 51, mechanically connected to the rotor shaft 31 of the electric motor, and a transmission member 52, engaged with the support body 2, preferably with the second containment shell 22, and mechanically connected to the eccentric device 51 and to the interdental brush 6 in order to move the interdental brush 6 along the aforesaid to-and-fro direction Z.

Advantageously the eccentric device 51 comprises at least one eccentric element 500, which is mechanically connected to the rotor shaft 31 and integral therewith in rotation in order to transport the rotary motion imparted by the rotor shaft 31 to the transmission member 52, as is better described hereinbelow.

More in detail, the eccentric element 500 advantageously comprises a first coupling portion 512, which is directed towards the rotor shaft 31 of the electric motor, has preferably elongated substantially cylindrical shape, and is provided with an insertion seat 511, preferably blind, within which the rotor shaft 31 with its free end 31' is housed.

Preferably the insertion seat 511 of the eccentric element 500 is counter-shaped with respect to a terminal portion of the rotor shaft 31 and in particular is provided with a narrow section on which a substantially flat wall is obtained, defining a second anti-rotational surface intended to face the first anti-rotational surface made on the rotor shaft 31, when the latter is engaged with the eccentric element 500, in order to render integral in rotation the rotor shaft 31 and the eccentric element 500.

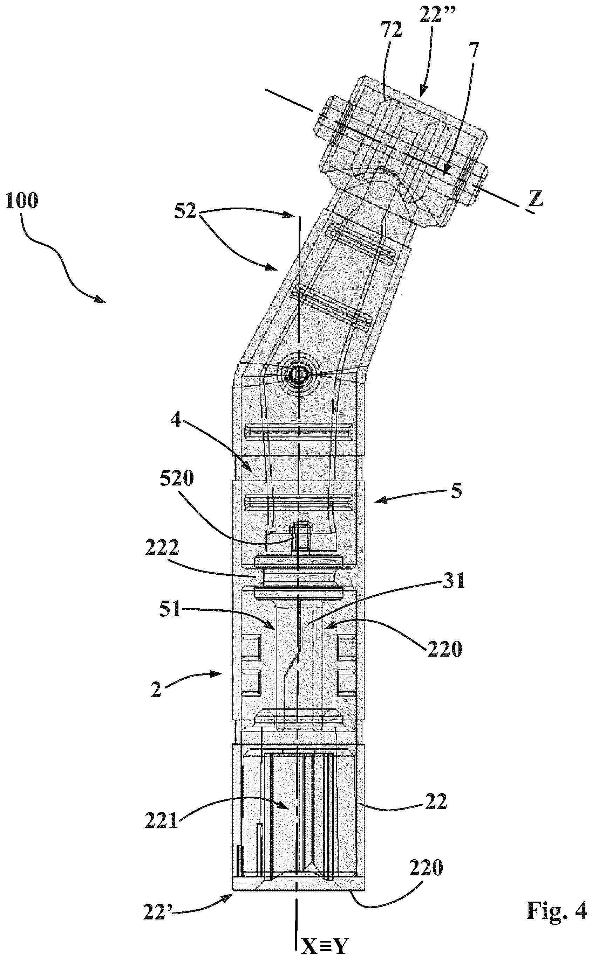

Advantageously, the coupling bush 221 is provided with a support shoulder against which the first coupling portion 512 of the eccentric element 500 abuts in order to support the latter during the rotation, as illustrated in figure 4.

The eccentric element 500 also advantageously comprises an actuation portion 513, preferably having circular shape, which is extended transversely with respect to the first coupling portion 512, preferably in a single body with the latter.

Advantageously the actuation portion 513 has disc form and is provided with a perimeter groove 513', which is extended preferably along the entire circumference of the actuation portion 513. The support body 2, and in particular the second containment shell 22, is advantageously provided with a circumferential protuberance 222, which is placed inside the second containment shell 22, and engages the perimeter groove 513' of the actuation portion 513 of the eccentric element 500, in order to support the eccentric element 500 during its rotation around the first rotation axis X.

Advantageously the eccentric element 500 also comprises a second coupling portion 514, placed on an opposite side of the actuation portion 513 with respect to the first coupling portion 512 and preferably has an elongated and substantially cylindrical shape.

Preferably, the second coupling portion 514 is susceptible of housing at its interior at least part of the rotor shaft 31, and in particular preferably the free end 31' of the rotor shaft 31.

Of course, without departing from the protective scope of the present invention, the eccentric element 500 may only comprise the first coupling portion 512 and the rotor shaft 31 can project from the eccentric element 500 itself.

Advantageously, the eccentric device 51 of the motion transformation means comprises a first eccentric pin 901, extended along a direction substantially parallel to the first rotation axis X.

More in detail, the first eccentric pin 901 is advantageously non-aligned with respect to the first rotation axis X, such that its motion comprises at least one direction substantially orthogonal to the first rotation axis X, and substantially parallel to the to-and-fro direction Z, when the rotor shaft 31 is rotated around the first rotation axis X.

The transmission member 52 also comprises at least one first housing seat 520, in which the first eccentric pin 901 is at least partially housed.

Advantageously the housing seat 520 is extended along a direction substantially parallel to the to-and-fro direction Z between a first abutment wall 520' and a second abutment wall 520", against which the first eccentric pin 901 acts during the motion thereof in order to move the transmission member 52 along the to-and-fro direction Z.

Advantageously the transmission member 52 of the motion transformation means 5 comprises a coupling body 7, which is guidedly mounted on the support body 2 and carries the interdental brush 6 mounted thereon. In particular the coupling body 7 is guidedly mounted along the aforesaid to-and-fro direction Z in order to slide along such to-and-fro direction Z, moving the interdental brush 6.

Preferably the transmission member 52 is configured for allowing a movement of the interdental brush 6 along the to-and-fro direction Z comprised between 1 and 5 mm and still more preferably substantially equal to 1.5 mm.

Advantageously the transmission member 52 also comprises a rocker arm 8, pivoted to the support body 2, in particular to the second containment shell 22, and provided with a first lever arm 81, mechanically connected to the eccentric device 51, and on which the first housing seat 520 is made, and a second lever arm 82, mechanically connected to the coupling body 7.

Advantageously, the first lever arm 81 and the second lever arm 82 are hinged to each other and the rocker arm 8 comprises constraining means 83, placed as a mechanical connection between the first lever arm 81 and the second lever arm 82 in order to render them integral with each other such that the movement imparted by the first eccentric pin 901 to the first lever arm 81 is rigidly transmitted to the second lever arm 82, and consequently to the coupling body 7.

Preferably, the two lever arms 81, 82 are hinged to each other by means of a hinging pin 84 fixed to the support body 2, and in particular to the second containment shell 22, in order to pivot the rocker arm 8 and simultaneously hinge together the first and the second lever arm 81, 82.

Of course it is also possible to employ two separate hinging pins 84, and more in detail a first hinging pin in order to pivot the rocker arm 8 to the support body 2 and a second hinging pin in order to hinge together the first and the second lever arm 81, 82. it is also possible of course that the hinging pin 84 be made in a single body with one of the two lever arms 81, 82.

In accordance with an embodiment variant, illustrated in the enclosed figures, the first lever arm 81 and the second lever arm 82 are made in a single body.

As described above the transmission member 52 is advantageously configured for allowing a travel of the interdental brush 6, during the movement along the to-and-fro direction Z, comprised between 1 and 5 mm and still more preferably substantially equal to 1.5 mm.

Advantageously, the hinging pin 84 defines a first lever length L1 of the first lever arm 81, which is preferably measured between a first connection point between the first lever arm 81 and the eccentric device 51 and the hinging pin 84.

More in detail, the aforesaid first connection point is for example placed at the coupling surface between the first eccentric pin 901 and the first housing seat 520, or alternatively any other element interposed between the eccentric device 51 and the first lever arm 81.

Advantageously moreover the hinging pin 84 defines a second lever length L2 of the second lever arm 82, measured between the hinging pin 84 and a second connection point between the second lever arm 82 and the coupling body 7.

More in detail, the aforesaid second connection point is for example placed at the coupling surface between an engagement portion 820 of the second lever arm 82 and a second housing seat 70 of the coupling body 7, described more in detail hereinbelow.

For the purpose of obtaining the aforesaid travel the ratio between the first lever length L1 and the second lever length L2 is preferably comprised between 0.3 and 3 and still more preferably substantially equal to 1.

The rocker arm 8 advantageously also allows reducing the bulk of the dental cleaning group 4, in particular along a direction parallel to the to-and-fro direction Z, since it allows spacing the coupling body 7, on which the interdental brush 6 is mounted, with respect to the eccentric device 51 and hence with respect to the motor.

Therefore, in such manner it is possible to advantageously attain a dental cleaning group 4 which is easier to insert, at least partially, within the mouth of a user in order to execute the operations of dental cleaning. In particular, by spacing the eccentric device 51, and hence the rotor shaft 31, from the coupling body 7 it is possible to attain the support body 2, and in particular the second containment shell 22, with substantially tapered shape, in order to reduce the bulk thereof during use within the mouth of the user. Of course, without departing from the protective scope of the present invention, the transmission member 52 may only comprise the coupling body 7, which is directly mechanically connected to the eccentric element 500. In such case the first housing seat 520 is advantageously made directly on the coupling body 7.

In accordance with the preferred embodiments illustrated in the enclosed figures, in order to render more compact the device 1 the second containment shell 22 of the support body 2 has a substantially rectilinear extension, and is extended between an enlarged portion, directed towards the base end 22' thereof, and a tapered opposite portion. In accordance with the aforesaid embodiments the first lever arm 81 and the second lever arm 82 have a substantially rectilinear extension.

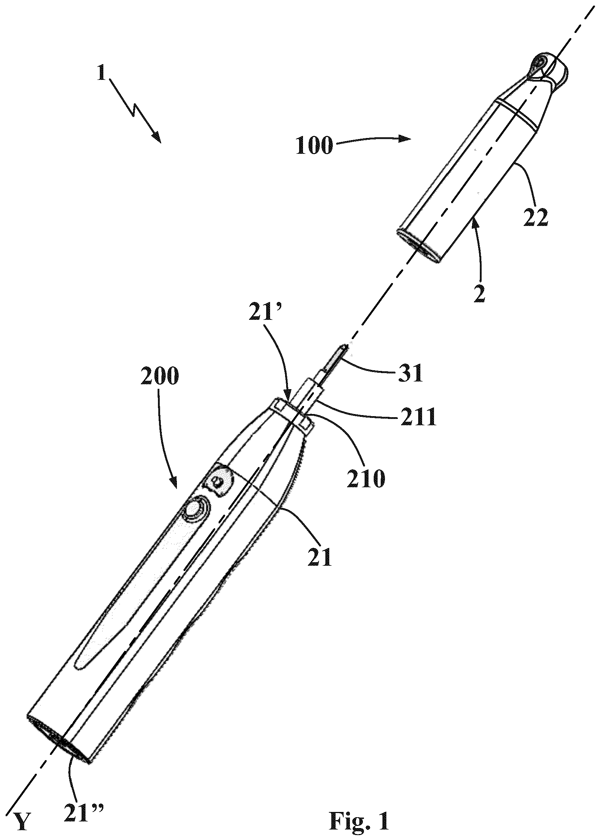

Otherwise, in accordance with an embodiment variant illustrated in figure 1, the second containment shell 22 of the support body 2 has an arched extension, and is extended between a rectilinear portion, substantially parallel to the first containment shell 21 and directed towards the base end 22' thereof, and a tilted portion, preferably tapered. Preferably, in accordance with such embodiment variant the tilted portion of the second containment shell 22 is tilted with respect to the rectilinear portion by an angle comprised between 10° and 50° and preferably close to 30°. In this manner the angle that is formed between the first rotation axis X and the to-and-fro direction Z is substantially 60°, ensuring optimal ergonomics both with regard to the grip of the device 1 and with regard to its use for the normal operations of dental/interdental cleaning.

In accordance with the aforesaid embodiment variant the rocker arm 8 has an arched extension corresponding to the arched extension of the second containment shell 22 and the hinging pin 84 is advantageously placed at a connector portion between the rectilinear portion and the tilted portion.

Advantageously, as briefly described above, the second lever arm 82 of the rocker arm 8 comprises an engagement portion 820, directed towards the coupling body 7, and such engagement portion 820 is preferably provided with a pin-shaped element, having elongated extension and preferably narrow section with respect to the rest of the second lever arm 82.

Advantageously the second containment shell 22 also comprises a head portion, which defines a terminal end 22" of the second containment shell 22 and is extended along a main extension direction substantially parallel to the to-and-fro direction Z, substantially orthogonally therefore to the rest of the second containment shell 22.

Advantageously the coupling body 7 is housed in the second containment shell 22 at the aforesaid head portion and comprises a cylindrical body 73, which is extended along a direction substantially parallel to the to-and-fro direction Z.

Preferably the cylindrical portion 73 is guidedly mounted on the head portion of the second containment shell 22. More in detail, the head portion of the second containment shell 22 is provided with a first support through opening, directed towards the interdental brush 6, and with an opposite second support opening, preferably blind. The aforesaid support openings are preferably placed on opposite sides of the head portion of the second containment shell 22 and are arranged for supporting the cylindrical body 73 of the coupling body 7 during its movement along the to-and-fro direction Z.

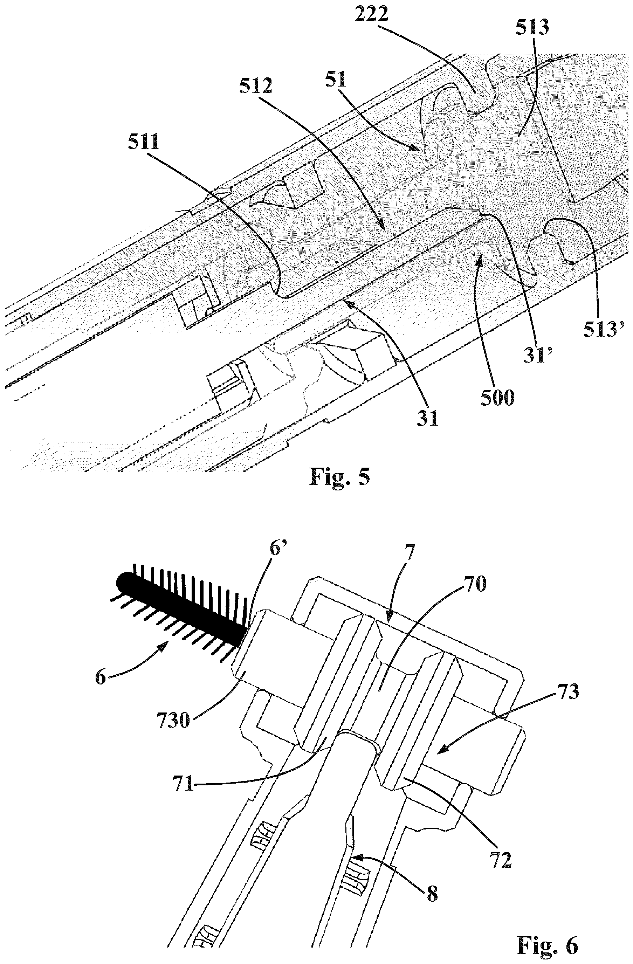

Advantageously the coupling body 7 comprises two radial shoulders 71, 72, which radially project from the cylindrical body 73, a second housing seat 70 between them. Advantageously moreover the two radial shoulders 71, 72 define two opposite stop surfaces susceptible of collaborating with the head portion of the second containment shell 22 in order to retain the coupling body 7 within the second containment volume 220, as better illustrated in figure 6.

Advantageously the radial shoulders 71, 72 and the second housing seat 70 are extended along the entire circumference of the cylindrical body 73 and are provided with a depth, measured along a direction orthogonal with respect to the to-and-fro direction Z, preferably of at least 1 mm and still more preferably comprised between 1 and 5 mm.

Of course, without departing from the protective scope of the present invention, the radial shoulders 71, 72 and the second housing seat 70 can be attained only on one portion of the cylindrical body 73, for example at the middle of the circumference of the cylindrical body 73.

Advantageously the aforesaid second housing seat 70 is extended between the aforesaid radial shoulders 71, 72 along a direction substantially parallel to the to-and-fro direction Z, and the engagement portion 820 of the second lever arm 82 at least partially engages the second housing seat 70 in order to move the coupling body 7 and the interdental brush 6 along the to-and-fro direction Z.

More in detail, the cylindrical body 73 is advantageously provided with a coupling section 730, made at the first support opening and arranged for carrying the interdental brush 6 mounted thereon, preferably by means of shape coupling.

For example, in a non-limiting manner, the cylindrical body 73 comprises, at the coupling section 730, a shaped coupling element, preferably extended parallel to the to-and-fro direction Z in order to receive a first end 6' of the interdental brush 6, preferably retaining it via interference, in a manner so as to support the interdental brush during the cleaning operations, simultaneously preventing this from being able to disengage from the aforesaid shaped coupling opening with its first end 6'.

Alternatively, in accordance with a non-illustrated embodiment variant, the coupling section 730 comprises a projecting element and the interdental brush 6 comprises, at the first end 6' thereof, an opening counter-shaped with respect to the aforesaid projecting element in order to allow the interference between the two and the mounting of the interdental brush 6 on the coupling body 7.

Advantageously, the eccentric device 51 comprises gear ratio reduction means 9, mechanically connected to the transmission member 52 of the motion transformation means 5 in order to reduce the frequency of translation of the interdental brush 6 along the to-and-fro direction Z.

Advantageously therefore the first eccentric pin 901 is made on the gear ratio reduction means 9, in order to be housed within the first housing seat 520.

As set forth above, the eccentric device 51 also advantageously comprises an eccentric element 500, which is preferably interposed between the rotor shaft 31 (and integral in rotation with the latter) and the gear ratio reduction means 9. In addition, the eccentric element 500 is advantageously provided with a second eccentric pin 510, which is mechanically connected to the gear ratio reduction means 9 in order to rotate them following the rotation of the rotor shaft 31.

More in detail, the second eccentric pin 510 of the eccentric element 500 is extended advantageously projecting from the actuation portion 513, along the aforesaid direction substantially parallel to the first rotation axis X, non-aligned with respect to the rotor shaft 31, such that the rotary motion of the eccentric element 500 determines a movement of the second eccentric pin 510 along a direction substantially orthogonal to the first rotation axis X.

Of course, in accordance with an embodiment not illustrated in the enclosed figures, the eccentric device 51 comprises only the eccentric element 500, and not the gear ratio reduction means 9. In accordance with the aforesaid embodiment the first eccentric pin 901 therefore coincides with the second eccentric pin 510, which therefore directly engages the first housing seat 520 of the transmission member 52.

Preferably the gear ratio reduction means 9 allow reducing the aforesaid ratio by a value comprised between 3 and 12 and still more preferably comprised between 8 and 10.

Advantageously, the gear ratio reduction means 9 comprise at least one toothed wheel 90, on which the first eccentric pin 901 is preferably obtained and which is provided with a plurality of transmission teeth 900.

More in detail, the toothed wheel 90 is extended preferably between a lower face 90', directed towards the eccentric element 500, and an upper face 90", opposite the lower face 90' and from which the aforesaid first eccentric pin 901 is preferably projectingly extended.

The first eccentric pin 901 is extended therefore preferably from the upper face 90" of the toothed wheel 90, and still more preferably from a perimeter portion of the same upper face 90", so as to be non-aligned with respect to the center of rotation of the toothed wheel 90 so as to complete, during its movement, a displacement at least along a direction substantially orthogonal to the first rotation axis X.

Of course, it is also possible to place the first eccentric pin 901 at a more central and not properly perimeter portion of the upper face 90" of the toothed wheel 90 without departing from the protective scope of the present invention. In such case of course there will be less displacement of the same first eccentric pin 901 along the aforesaid direction substantially orthogonal to the first rotation axis X.

Preferably the transmission teeth 900 are obtained on the lower face 90' of the toothed wheel 90, in order to transfer the rotary motion received from other components of the gear ratio reduction means 9 (described in detail below) or alternatively directly from the eccentric element 500.

Advantageously each transmission tooth 900 is provided with an axial extension, preferably along a direction substantially parallel to the first rotation axis X, and is connected to an adjacent transmission tooth 900 by means of a tilted connector section. Preferably, the toothed wheel 90 comprises a number of transmission teeth 900 comprised between three and twelve and still more preferably equal to nine.

Advantageously, the gear ratio reduction means 9 also comprise at least one support element 91, integral with the support body 2 and in particular with the second containment shell 22, which is preferably provided with a rotation pin 910 susceptible of defining a center of rotation of the eccentric element 500.

In accordance with the first embodiment the support element 91 comprises a central body 911, from which the rotation pin 910 preferably projects below and which is preferably provided with a housing hole, arranged for rotatably housing the second coupling portion 514 of the eccentric element 500, or alternatively the rotor shaft 31.

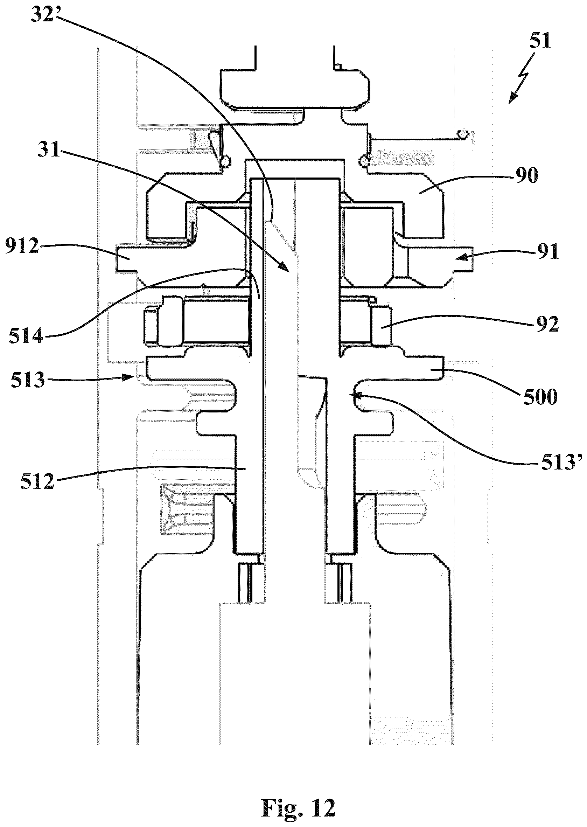

The support element 91 also advantageously comprises at least one support wing 912, and preferably two support wings 912, which are extended laterally projecting from the central body 911 and engage two corresponding seats made on the support body 2, as illustrated in figure 12.

Preferably the aforesaid corresponding seats in which the support wings 912 are engaged are made on the second containment shell 22, in order to render integral in rotation the containment shell 22 and the support element 91, therefore preventing the rotation of the latter during the rotation of the eccentric element 500.

The gear ratio reduction means 9 also advantageously comprise a reducer body 92, which is preferably provided with a first insertion hole 920, in which the second eccentric pin 510 of the eccentric element 500 is at least partially housed, a second insertion hole 921, in which the rotation pin 910 of the support element 91 is at least partially housed and defining a center of rotation for the reducer body 92, and an engagement element 93, projecting along a direction substantially parallel to the first rotation axis X and arranged for engaging the transmission teeth 900 of the toothed wheel 90 in order to rotate it.

In accordance with the aforesaid first embodiment the reducer body 92 is advantageously provided with a through slot 922, preferably C-shaped, within which the second coupling portion 514 of the eccentric element 500, or alternatively the rotor shaft 31, is placed through in order to allow the rotation of the reducer body 92 around the center of rotation thereof without interfering with the second coupling portion 514 or with the rotor shaft 31.

The first insertion hole 920 is advantageously placed at a first distance D1 from the second insertion hole 921 while the engagement element 93 is placed at a second distance D2 from the second insertion hole 921, greater than the first distance D1, so as to increase the angular movement of the engagement element 93 with respect to the angular movement of the second eccentric pin 510.

In particular, the ratio between the second distance D2 the first distance D1 is advantageously comprised between 6 and 1, preferably substantially equal to 2.5, in order to obtain a reduction of the gear ratio preferably comprised between 3 and 12. More in detail, an angular width carried out by the second eccentric pin 510 preferably comprised between 80° and 10° corresponds with an angular width carried out by the engagement element 93 preferably comprised between 30° and 120°.

Advantageously, the toothed wheel 90 is also provided with a plurality of blocking teeth 902, made at the upper face 90", opposite the lower face 90' on which the transmission teeth 900 are made.

More in detail, the blocking teeth 902 are preferably provided with a radial extension and are preferably in a number equal to the number of transmission teeth 900 made on the lower face 90' of the toothed wheel 90. In addition, the blocking teeth 902 are advantageously placed at the transmission teeth 900.

Advantageously moreover the motion transformation means 5 comprise a stopping element 53, connected to the support body 2, in particular integral in rotation with the support body 2, which is provided with at least one stopping arm 531 susceptible of cooperating with one of the aforesaid blocking teeth 902 in order to prevent the rotation of the toothed wheel 90 around the first rotation axis X in the second rotation sense.

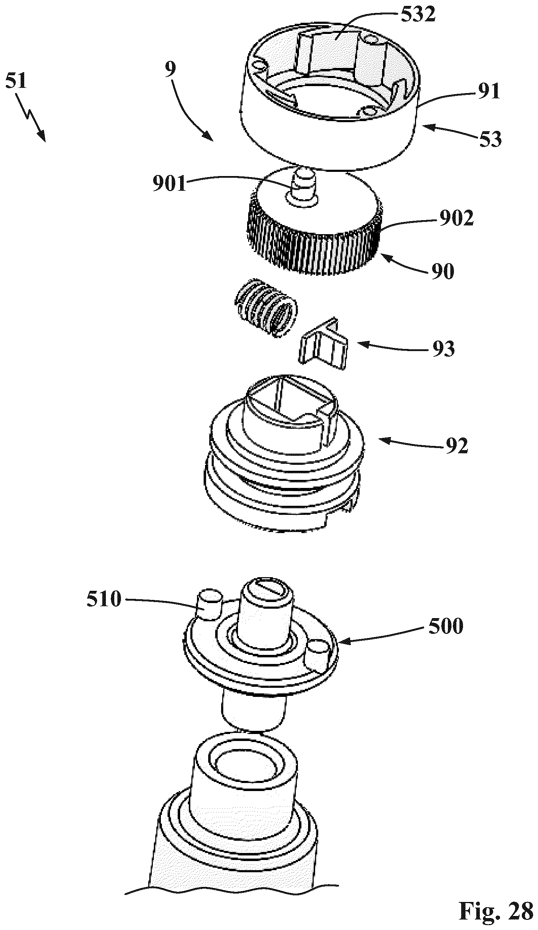

Advantageously, the stopping element 53 and the support body 91 are made in a single body, such as for example illustrated in figure 28, and in such case the support body 91 does not comprise a rotation pin 910.

More in detail, the stopping element 53 advantageously comprises a spring 530 preferably provided with two stopping arms 531 which are arranged for allowing the rotation of the toothed wheel 90 in the first rotation sense and for cooperating with the blocking teeth 902 and preventing the rotation of the toothed wheel 90 itself in the second rotation sense.

In particular, the stopping arms 531 are placed so as to cooperate with the blocking teeth 902 (preventing the rotation of the toothed wheel 90) when the engagement element 93 is rotated in the second rotation sense by the eccentric element 500, and on the contrary the stopping arms 531 are placed so as to allow the rotation of the toothed wheel 90 when the engagement element 93 is rotated in the first rotation sense by the eccentric element 500.

Advantageously, the second eccentric pin 901 of the toothed wheel 90 is placed within a circumference delimited by the blocking teeth 902, so as to prevent the interference between the second eccentric pin 901 and the stopping element 53.

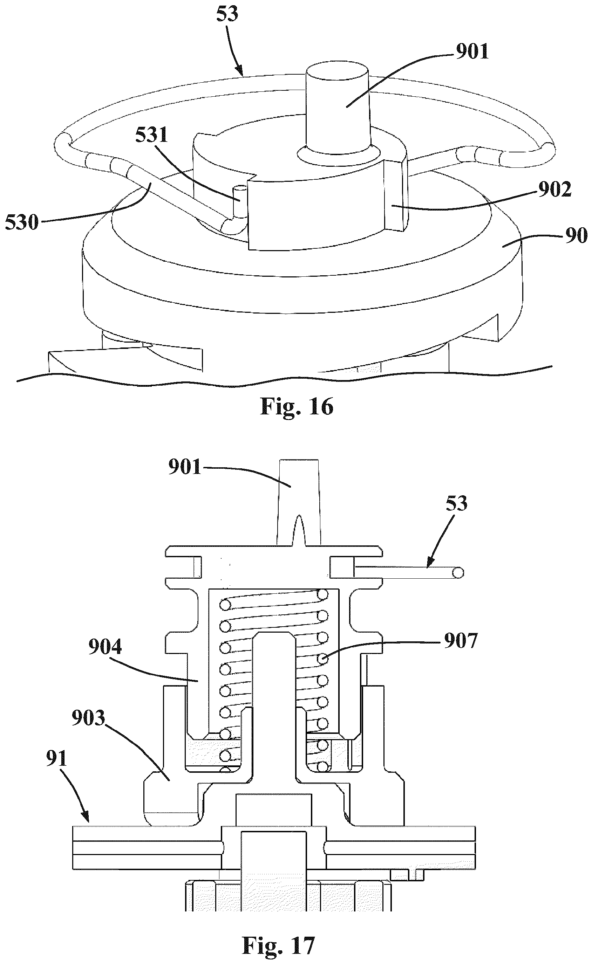

The toothed wheel 90 advantageously comprises a first half-body 903 and a second half-body 904, on which the first eccentric pin 901 is preferably made, as is for example illustrated in the embodiment variant of the first embodiment of figure 17.

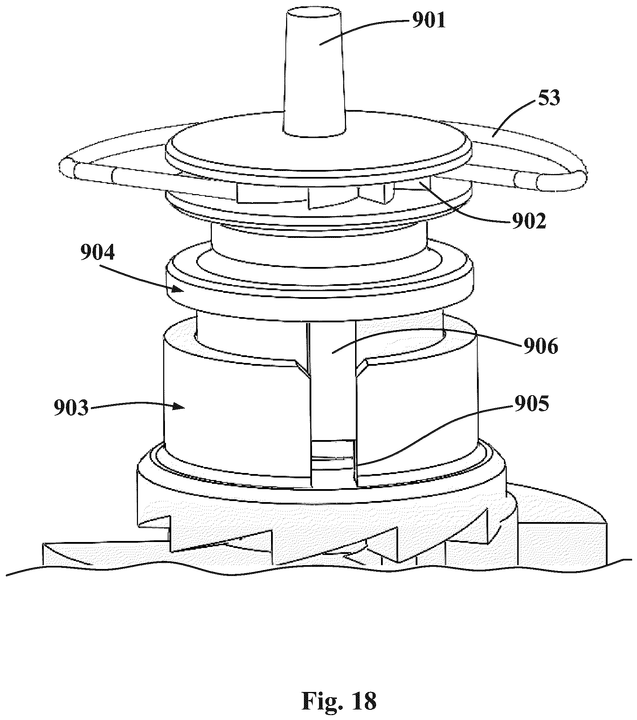

The two half-bodies 903, 904 are advantageously integral with each other in rotation and free to mutually translate along a direction substantially parallel to the first rotation axis X. For example, in accordance with the aforesaid embodiment variant the first half-body 903 is provided with a longitudinal slit 905, illustrated in figure 18, and still more preferably with two longitudinal slits.

Advantageously the second half-body 904 is provided with a longitudinal tongue 906, and preferably two longitudinal tongues, projecting below and adapted to engage the corresponding longitudinal slit 905 in order to constrain in rotation the first half-body 903 and the second half-body 904.

Advantageously, in accordance with the aforesaid embodiment variant each of the two half-bodies 903, 904 defines, at its interior, a cavity and the toothed wheel 90 comprises a helical spring 907, placed within the aforesaid cavities and interposed between the two half-bodies 903, 904 in order to exert a corresponding elastic force on the first half-body 903 in order to retain it in abutment against the support element 91 and simultaneously allow the lifting thereof during the rotation of the engagement element 93 in the second rotation sense.

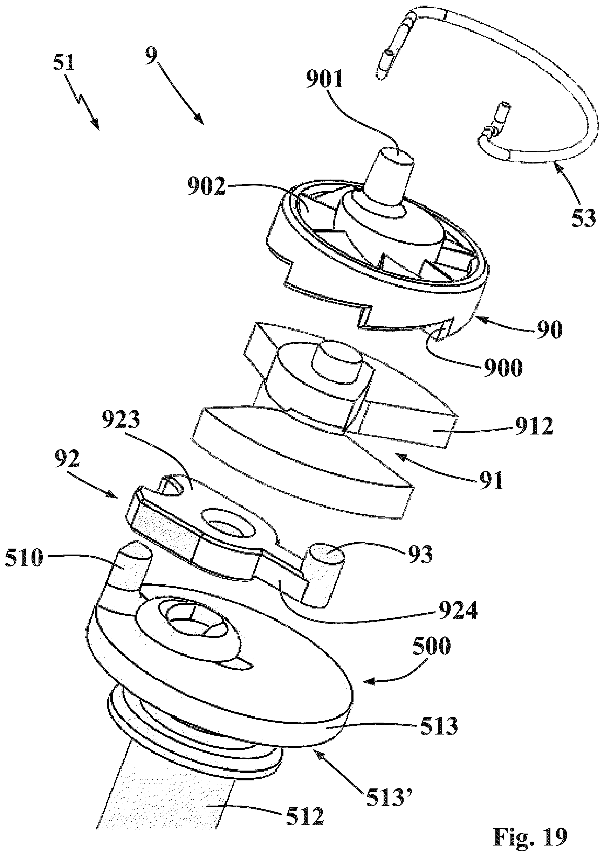

In accordance with a second embodiment, illustrated in figure 19, non-limiting but applicable to further embodiments, the eccentric element 500 does not comprise a second coupling portion 514 and the reducer body 92 does not comprise a through slot 922. More in detail, in accordance with the aforesaid second embodiment the reducer body 92 advantageously comprises a base plate 923, on which the first insertion hole 920 and the second insertion hole 921 are obtained, and a transverse element 924, projecting laterally from the base plate 923 and from whose end the engagement element 93 is extended.

Preferably the base plate 923 is susceptible of being placed in abutment against the eccentric element 500, while the transverse element 924 is advantageously arranged for remaining lifted with respect to the eccentric element 500.

In this manner the transverse element 924 is therefore advantageously susceptible of being bent during the rotation of the engagement element 93 in the second rotation sense.

More in detail, the sliding of the engagement element 93 against the tilted connector section of the transmission teeth 900 determines a bending of the transverse element 924 which allows the engagement element 93 to follow the path between the transmission teeth 900 without risks of jamming or wear.

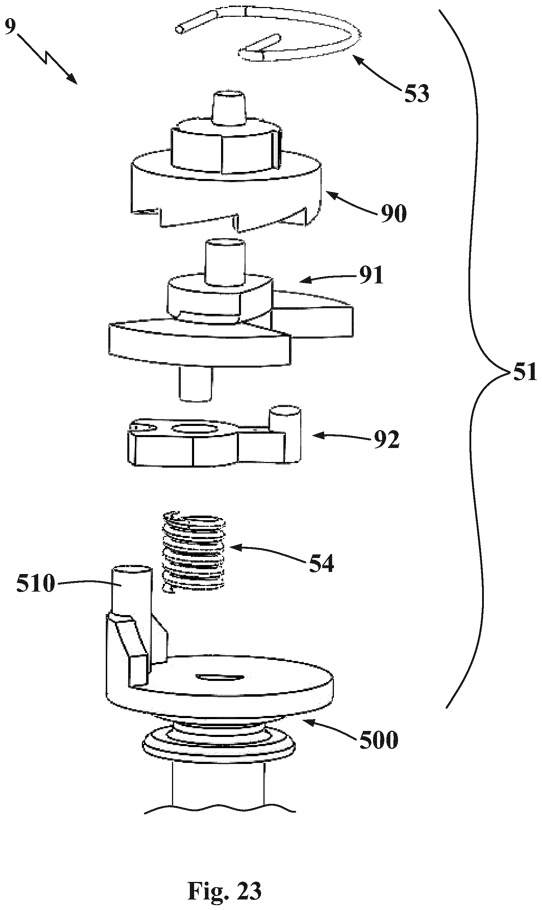

Alternatively, for example in accordance with a third embodiment illustrated in figure 23, the gear ratio reduction means 5 comprise preferably an elastic element 54, preferably a spring of helical type, which is interposed between the eccentric element 500 and the reducer body 92, in order to allow the axial movement of the latter, along a direction parallel to the first rotation axis X, during the rotation of the engagement element 93 in the second rotation sense.

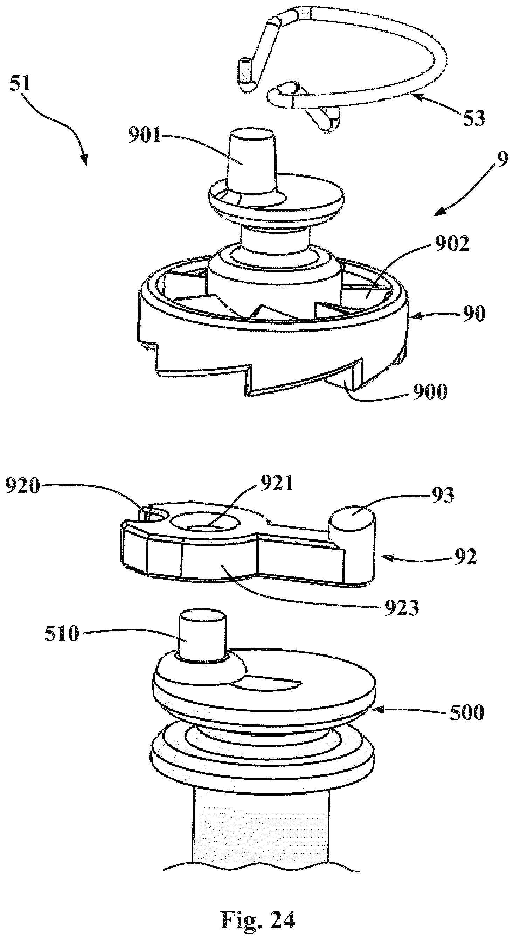

Advantageously the support element 91 is made in a single body with the support body 2, as is for example illustrated in a fourth embodiment of figure 24.

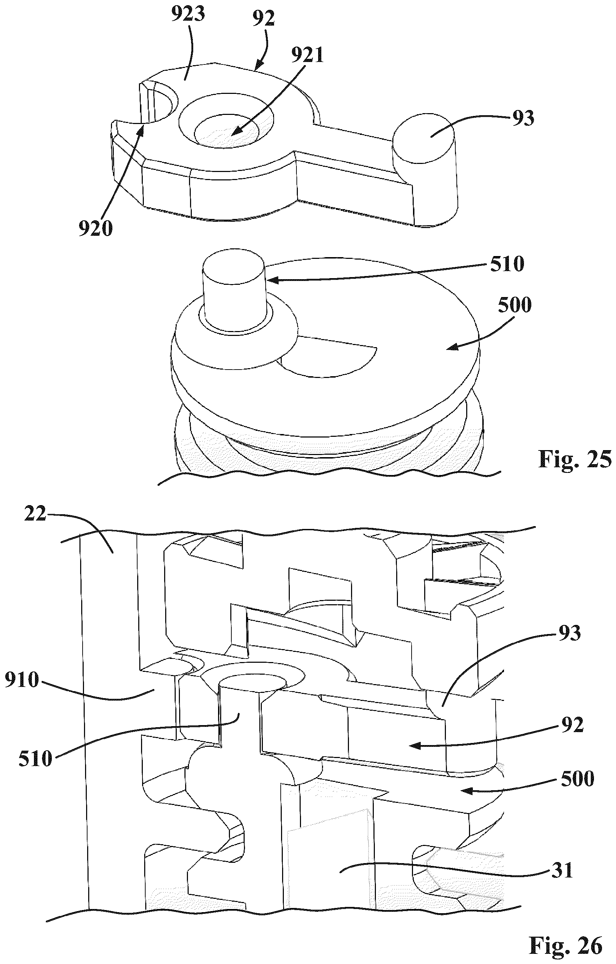

Preferably, the support element 91 is made of a single body with the second containment shell 22 and the rotation pin 910 projects radially from an internal surface of the aforesaid containment shell 22, as is better illustrated in figure 26.

Advantageously moreover the toothed wheel 90 comprises, at the upper face 90" thereof, a guide element which comprises a radial groove and from which the first eccentric pin 901 is extended.

More in detail, the radial groove of the guide element is arranged for cooperating with a guide, not illustrated, made on the second containment shell 22 so as to allow the guided axial movement of the toothed wheel 90, along a direction parallel to the first rotation axis X during the rotation of the engagement element 93 in the second rotation sense.

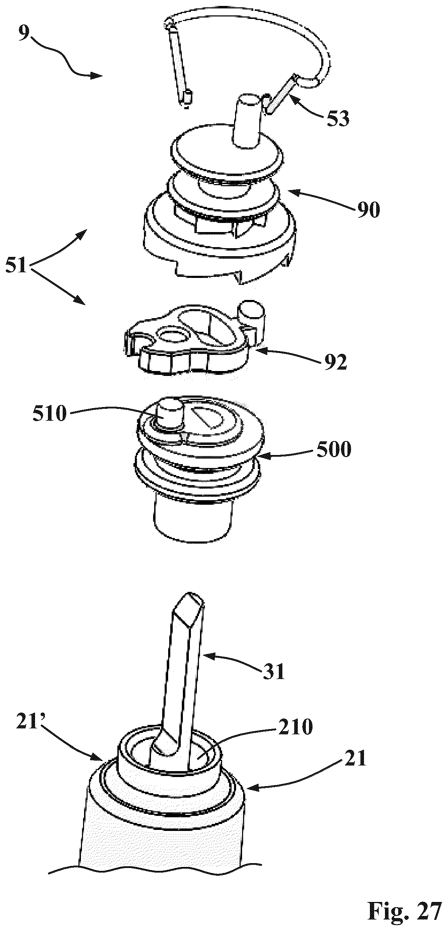

Of course, as better illustrated in figure 27, in the event in which the rotor shaft 31 of the electric motor is extended beyond the eccentric element 500, the reducer body 92 is provided with the through slot 922, already described above, so as to prevent interferences between the reducer body 92 and the same rotor shaft 31.

In accordance with the fifth embodiment, illustrated in figure 28, the reducer body 92 comprises a cylinder 925, on which the first insertion hole 920, preferably a slot, is obtained on which the second eccentric pin 510 is inserted, and an engagement element 93 which is mechanically connected to the cylinder 925, preferably with an elastic means interposed. More in detail, in accordance with such fifth embodiment in which the first insertion hole 920 is a slot, the reducer body 92 and the eccentric element 500 are not integral in rotation in a continuous manner. In particular, when the eccentric element 500 rotates in the first rotation sense, the second eccentric pin 510 determines a rotation of the reducer body 92 while, by virtue of the enlarged insertion hole 920 (with slot shape), when the eccentric element 500 rotates in the second rotation sense the second eccentric pin 500 does not immediately intercept the walls of the insertion hole 920, determining a loss of the travel.

The aforesaid travel loss is advantageously proportional to the distance between the walls of the slot and allows obtaining an indirect transmission between the eccentric element 500 and the reducer body 92.

In accordance with the aforesaid fifth embodiment, applicable nevertheless to other embodiments described, the engagement element 93 is extended advantageously along a direction substantially orthogonal to the first rotation axis X and is preferably provided, at an end thereof, with at least one engagement tooth.

More in detail, the toothed wheel 90 advantageously has ring shape and is provided with an external surface, on which the blocking teeth 902 are obtained, and with an internal surface, at which the transmission teeth 900 are obtained, which are preferably arranged for cooperating with the engagement tooth of the engagement element 93.

In such case the stopping element 53 advantageously comprises a disc, integral with the support body 2 and preferably with the second containment shell 22 and which also corresponds to the support element 91.

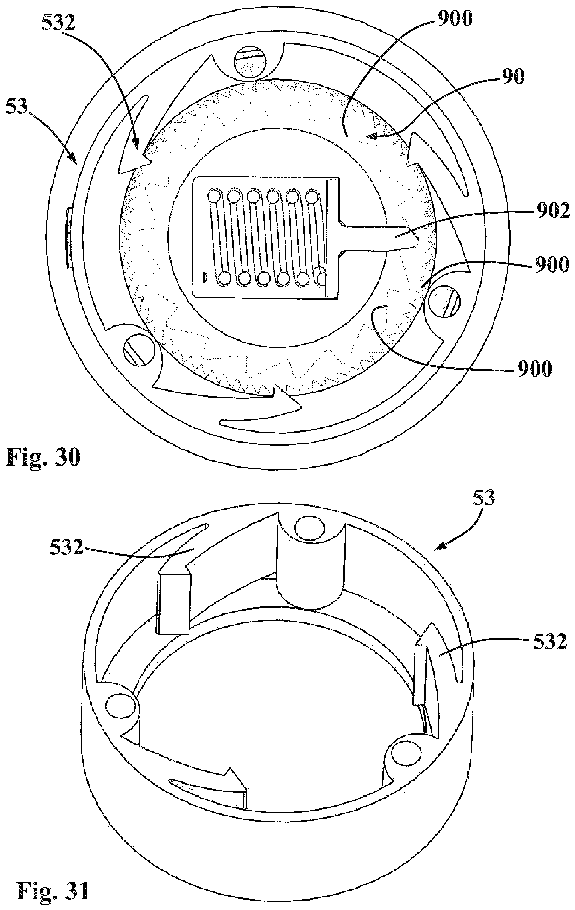

The disc of the stopping element 53 is advantageously internally provided with at least one blocking tab 532, and preferably with three blocking tabs 532, which are equidistant from each other. Advantageously the aforesaid blocking tabs 532 are extended projecting from the disc and are preferably flexible, in order to be bent between a blocking position, in which they are placed at the blocking teeth 902 of the toothed wheel 90, and a release position, in which they are bent substantially in abutment against an internal surface of the disc of the stopping element 53 in order to allow the rotation of the toothed wheel 90. More in detail, each blocking tab 532 is shaped at an end thereof with a stop projection susceptible of cooperating with the blocking teeth 902 only along the second rotation sense, as better illustrated in figure 31, allowing on the contrary the rotation of the toothed wheel 90 in the first rotation sense.

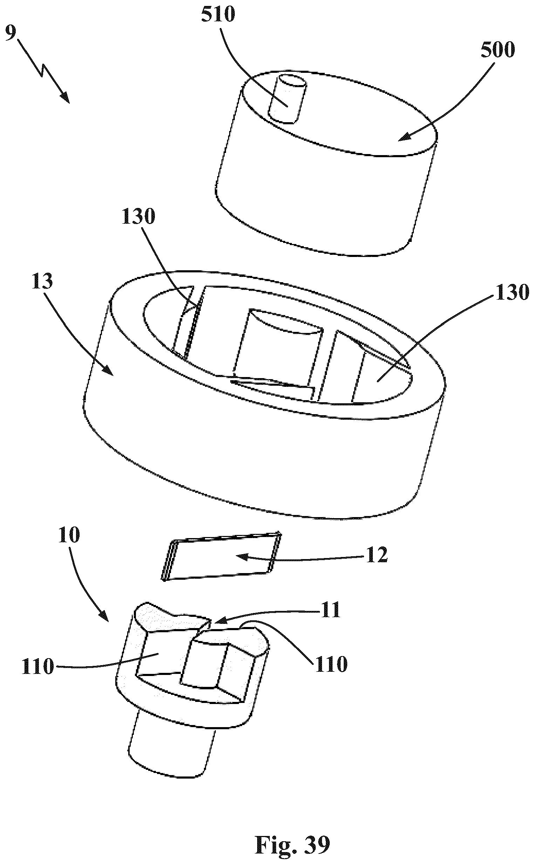

In accordance with a sixth embodiment illustrated in figure 39, the eccentric element 500 is a hollow cylindrical body, within which a toothing is made, preferably along the entire circumference of the internal surface of the eccentric element 500.

The eccentric element 500, in accordance with the aforesaid sixth embodiment, is mechanically connected to the rotor shaft 31 by means of a connector body 10, which is integral in rotation with the rotor shaft 31 and is provided, at an upper face thereof, with at least one abutment seat 11 which is delimited by at least two abutment walls 110, tilted with respect to each other by an offset angle.

The connector body 10 advantageously comprises a substantially plate-like element 12, preferably flexible, which is inserted within the aforesaid abutment seat 11 and is movable in rotation in order to abut against the abutment walls 110 which define the abutment seat 11.

Advantageously, the connector body 10 is mechanically connected to the eccentric element 500 by means of the plate-like element 12, which engages the above-described toothing in order to rotate the eccentric element 500 following the rotation of the rotor shaft 31 in the first rotation sense. On the contrary, however, when the rotor shaft 31 is rotated in the second rotation sense, the plate-like element 12 rotates between the two abutment walls 110 without interfering with the latter and hence not exerting in such step any transport of motion to the eccentric element 500. Such absence of transmission between plate-like element 12 and connector body 10 is proportional to the angular offset between abutment walls 110, intended as angle defined between the latter, which is preferably comprised between 5° and 50° and still more preferably between 5° and 30°.

In addition, in operation, the plate-like element 12 is preferably flexible so as to be bent when it arrives in abutment against the other abutment wall 110 during the rotation of the rotor shaft 31 in the second rotation sense, also preventing (or at least slowing) in such case the rotation of the eccentric element 500 in the second rotation sense. In order to further also prevent the rotation of the eccentric element 500 in the second rotation sense, the second containment shell 22 comprises a friction portion 13, which is arranged for collaborating with the eccentric element 500 via friction, preventing the rotation thereof in the second rotation sense. For example, such friction portion 13 comprises wing-shaped projecting bodies 130, which intercept an external surface of the eccentric element 500 in order to cooperate in friction with the latter.

Advantageously, as set forth above, the rocker arm 8 comprises constraining means 83, arranged for preventing the further movement of the interdental brush 6 along the to-and-fro direction Z due to reaction forces acting on the interdental brush 6 higher than a preset threshold value.

Advantageously, the constraining means 83 comprise a return spring 830, interposed between the first lever arm 81 and the second lever arm 82 in order to exert an elastic force on the first lever arm 81 and the second lever arm 82 and render integral in rotation the first lever arm 81 and the second lever arm 82. More in detail, the second lever arm 82 is advantageously provided with a coupling tooth and the first lever arm 81 is provided with a slit, engageable by the coupling tooth in order to render integral in rotation the first lever arm 81 and the second lever arm 82. In addition, the slit is advantageously open laterally in order to allow disengaging the first lever arm 81 and the second lever arm 82, preferably via retreating movements of the interdental brush 6.

The return spring 830 is therefore arranged for retaining the tooth within the slit with a preset elastic force Fe, which depends on the preloading that was given to the same return spring 830.

Advantageously, the return spring 830 is configured for releasing the first lever arm 81 and the second lever arm 82 from each other due to reaction forces greater than the aforesaid elastic force.

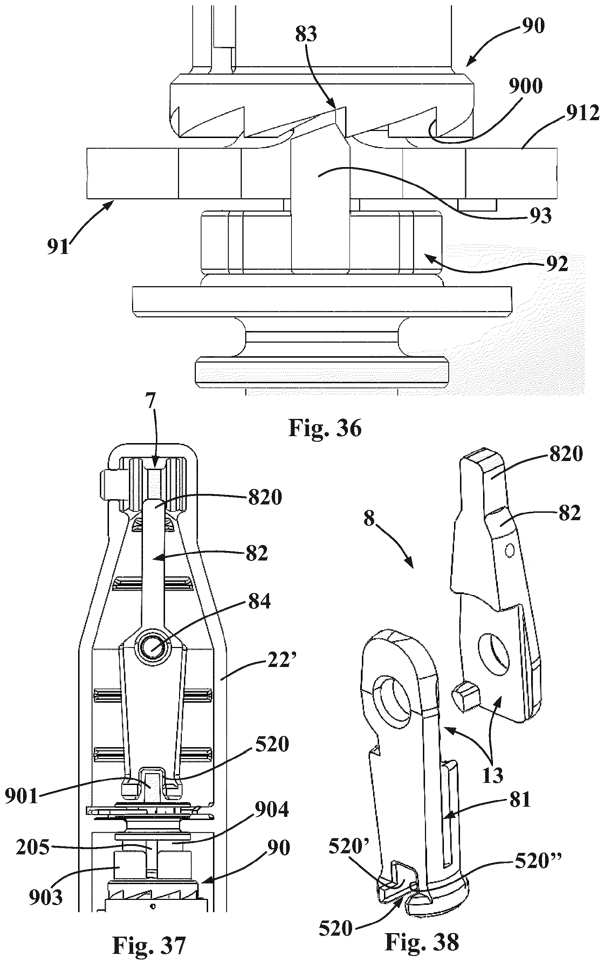

In accordance with the embodiment variant illustrated in figure 36, the transmission teeth 900 are advantageously provided with a tilted transmission surface while the engagement element 93 is provided with a tilted engagement surface, and such tilted surfaces form constraining means 83. More in detail, the aforesaid tilted surfaces define two tilted planes which allow dividing the rotation force imparted by the motor into a first horizontal component (orthogonal to the first rotation axis X), and a vertical component (parallel to the first rotation axis X).

Therefore, under the action of the vertical component of the aforesaid rotation force, the first half-body 903 of the toothed wheel 90 is susceptible of vertically sliding, in particular in the event in which the force that the helical spring 907 exerts on the same first half-body 903 is exceeded.

In this manner, therefore, in case of reaction forces acting on the interdental brush 6 higher than a preset value, the first half-body 903 of the toothed wheel 90 vertically slides, releasing the engagement element 93 from the transmission teeth 900 and preventing the transmission of the motion between the eccentric element 500 and the interdental brush 6, thus reducing the risk of injuring the user.

Advantageously the constraining means 83 comprise two friction faces, which are placed in abutment against each other in order to be integral in rotation due to reaction forces lower than a preset friction force. More in detail, the first and the second lever arm 81, 82 are both provided with a friction face, facing each other and the first and the second lever arm 81, 82 are placed in abutment against each other with the respective friction faces. In this manner the first and the second lever arm 81, 82 are retained constrained by a friction force generated between the aforesaid friction faces and are therefore integral during their movement. The friction force acting between the friction faces is advantageously preset in a manner such that due to reaction forces greater than the aforesaid friction force the two lever arms 81, 82 are released, preventing the transmission of the motion from the eccentric element 500 to the interdental brush 6, thus reducing the risk of injuring the user.

Preferably, the friction force and the elastic force are preset substantially coinciding.

Advantageously, in accordance with an embodiment variant illustrated in figure 38, the second lever arm 82 is provided with a wall projecting from the friction face, which is arranged for cooperating with a transverse wall of the first lever arm 81, in order to increase the friction force between the first lever arm 81 and the second lever arm 82.

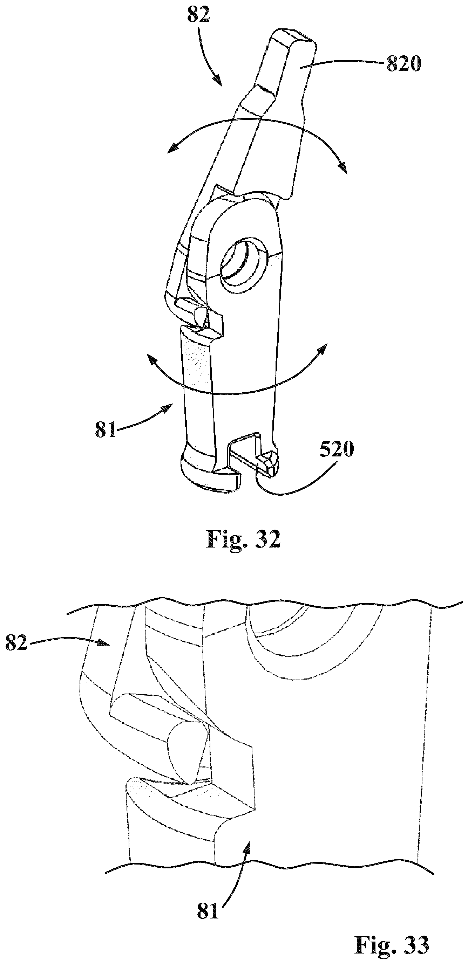

Alternatively it is also possible to suitably shape the second lever arm 82, for example by reducing the section thereof along a direction substantially parallel to the to-and-fro direction Z, in order to allow the second lever arm 82 to be bent, as better represented in figure 33, due to reaction forces acting on the interdental brush 6 sufficient to obstruct the transmission of the motion between the eccentric element 500 and the interdental brush 6, thus reducing the risk of injuring the user.

A dental cleaning head 100, which does not form part of the claimed invention and regarding which the same reference numbers will be maintained for the sake of description simplicity, is described.

The dental cleaning head 100 is removably mountable on a motor body 200, which advantageously comprises an electric motor provided with a rotor shaft 31.

The dental cleaning head 100 comprises the support body 2, extended along a main extension direction Y, defining at its interior a first containment volume and removably connectable to the motor body 200.

The dental cleaning head 100 also comprises the dental cleaning group 4, which comprises a interdental brush 6, susceptible of being connected to the rotor shaft 31 in order to be moved by an oscillatory rectilinear motion along a to-and-fro direction Z, and motion transformation means 5, housed in the support body 2, mechanically connectable to the rotor shaft 31 and mechanically connected to the interdental brush 6 in order to transform the rotary motion of the electric motor into the oscillatory rectilinear motion of the interdental brush 6. The motion transformation means 5 comprise at least one eccentric device 51, mechanically connectable to the rotor shaft 31, integral in rotation with the latter, and a transmission member 52, engaged with the support body 2 and mechanically connected to the eccentric device 51 and to the interdental brush 6 in order to move the interdental brush 6 along the to-and-fro direction Z.

## Claims

1. Electrical device for dental cleaning, which comprises:
- a support body (2), extended along a main extension direction (Y) and defining a first containment volume (20) at its interior;
- an electric motor, placed within the first containment volume (20) of said support body (2) and comprising a rotor shaft (31), actuatable to rotate around a first rotation axis (X);
- a dental cleaning group (4), which comprises:
- an interdental brush (6) connected to said rotor shaft (31) in order to be moved by an oscillatory rectilinear motion along a to-and-fro direction (Z);
- motion transformation means (5), housed in said support body (2), interposed between said rotor shaft (31) and said interdental brush (6) in order to transform the rotary motion of said electric motor into the oscillatory rectilinear motion of said interdental brush (6), and such motion transformation means (5) comprise:
- at least one eccentric device (51), mechanically connected to the rotor shaft (31) of said electric motor, and comprising at least one first eccentric pin (901) extended along a direction substantially parallel to said first rotation axis (X); and
- a transmission member (52), engaged with said support body (2) and mechanically connected to said eccentric device (51) and to said interdental brush (6) in order to move said interdental brush (6) along said to-and-fro direction (Z); said transmission member (52) comprising at least one first housing seat (520), in which said first eccentric pin (901) is at least partially housed, and such housing seat (520) is extended along a direction substantially parallel to said to-and-fro direction (Z) between a first abutment wall (520') and a second abutment wall (520"), against which said first eccentric pin (901) acts in order to move said first transmission member (52) along said to-and-fro direction (Z);
wherein the transmission member (52) comprises a coupling body (7), guidedly mounted on said support body (2) and carrying, mounted thereon, said interdental brush (6), **characterized in that** the transmission member (52) further comprises a rocker arm (8), pivoted to said support body (2) and provided with:
- a first lever arm (81) mechanically connected to said eccentric device (51) and on which said first housing seat (520) is obtained;
- a second lever arm (82), mechanically connected to said coupling body (7).

2. Device according to claim 1, **characterized in that** the second lever arm (82) of said rocker arm (8) comprises an engagement portion (820), directed towards said coupling body (7), and that said coupling body (7) comprises two radial shoulders (71, 72), which between them define a second housing seat (70), extended between said radial shoulders (71, 72) along a direction substantially parallel to said to-and-fro direction (Z);
the engagement portion (820) of said second lever arm (82) at least partially engaging said second housing seat (70) in order to move said coupling body (7) and said interdental brush (6) along said to-and-fro direction (Z).

3. Device according to claim 1 or 2, **characterized in that** said eccentric device (51) comprises gear ratio reduction means (9), mechanically connected to said transmission member (52) in order to reduce the frequency of translation of said interdental brush (6) along said to-and-fro direction (Z).

4. Device according to claim 3, **characterized in that** said eccentric device (51) comprises an eccentric element (500), interposed between said rotor shaft (31) and said gear ratio reduction means (9) and provided with a second eccentric pin (510), mechanically connected to said gear ratio reduction means (9).

5. Device according to claim 4, **characterized in that** said gear ratio reduction means (9) comprise:
- at least one toothed wheel (90), on which said first eccentric pin (901) is obtained and which is provided with a plurality of transmission teeth (900);
- at least one support element (91), integral with said support body (2) and provided with a rotation pin (910);
- at least one reducer body (92) provided with:
- a first insertion hole (920), in which the second eccentric pin (510) of said eccentric element (500) is at least partially housed;
- a second insertion hole (921), in which the rotation pin (910) of said support element (91) is at least partially housed and defining a rotation axis of said reducer body (92), and
- an engagement element (93), projecting along a direction substantially parallel to said first rotation axis (X) and arranged for engaging the transmission teeth (900) of said toothed wheel (90) in order to rotate it;
said first insertion hole (920) being placed at a first distance (D1) from said second insertion hole (921) and said engagement element (93) being placed at a second distance (D2) from said second insertion hole (921), greater than said first distance (D1) in order to increase the angular movement completed by said engagement element (93) with respect to said second eccentric pin (510).

6. Device according to claim 5, **characterized in that** said toothed wheel (90) is provided with a plurality of blocking teeth (902), at a face opposite that where said transmission teeth (900) are obtained, and that said motion transformation means (5) comprise a stopping element (53), connected to said support body (2) and provided with at least one stopping section susceptible of cooperating with one of said blocking teeth (902) in order to prevent the rotation of said toothed wheel (90) in a second rotation sense.

7. Device according to any one of the preceding claims, **characterized in that** said rocker arm (8) comprises constraining means (83), arranged for preventing the further movement of said interdental brush (6) along said to-and-fro direction (Z) due to reaction forces acting on said interdental brush (6) higher than a preset threshold value.

8. Device according to claim 7, **characterized in that** said constraining means (83) comprise a return spring (830), interposed between said first lever arm (81) and said second lever arm (82) in order to exert an elastic force on said first lever arm (81) and said second lever arm (82) and render integral in rotation said first lever arm (81) and said second lever arm (82);
said return spring (830) being configured for releasing said first lever arm (81) and said second lever arm (82) from each other due to reaction forces higher than said elastic force.

## Patentansprüche

1. Elektrisches Dentalreinigungsgerät, das Folgendes umfasst:
- einen Stützkörper (2), der entlang einer Hauptrichtung (Y) verläuft und in seinem Inneren ein erstes Aufnahmevolumen (20) festlegt;
- einen Elektromotor, der im ersten Aufnahmevolumen (20) des genannten Stützkörpers (2) angeordnet ist und eine Rotorwelle (31) umfasst, die so betätigt werden kann, dass sie sich um eine erste Drehachse (X) dreht;
- eine Dentalreinigungsgruppe (4), die Folgendes umfasst:
- eine Interdentalbürste (6), die mit der genannten Rotorwelle (31) verbunden ist, um durch eine oszillierende geradlinige Bewegung entlang einer Hin- und Her-Richtung (Z) bewegt zu werden;
- Bewegungsumwandlungsmittel (5), die in dem genannten Stützkörper (2) untergebracht und zwischen der genannten Rotorwelle (31) und der genannten Interdentalbürste (6) angeordnet sind, um die Drehbewegung des genannten Elektromotors in die oszillierende geradlinige Bewegung der genannten Interdentalbürste (6) umzuwandeln, wobei diese Bewegungsumwandlungsmittel (5) Folgendes umfassen:
- mindestens eine Exzentervorrichtung (51), die mechanisch mit der Rotorwelle (31) des genannten Elektromotors verbunden ist und mindestens einen ersten Exzenterstift (901) umfasst, der entlang einer im Wesentlichen parallel zur ersten Drehachse (X) verlaufenden Richtung verläuft; und
- ein Übertragungselement (52), das in den genannten Stützkörper (2) greift und mechanisch mit der genannten Exzentervorrichtung (51) sowie mit der genannten Interdentalbürste (6) verbunden ist, um die genannte Interdentalbürste (6) entlang der genannten Hin- und Her-Richtung (Z) zu bewegen; wobei das genannte Übertragungselement (52) mindestens einen ersten Gehäusesitz (520) umfasst, in dem der genannte erste Exzenterstift (901) zumindest teilweise untergebracht ist, und dieser Gehäusesitz (520) entlang einer im Wesentlichen parallel zu der genannten Hin- und Her-Richtung (Z) zwischen einer ersten Anschlagwand (520') und einer zweiten Anschlagwand (520") verlaufenden Richtung verläuft, gegen die der genannte erste Exzenterstift (901) einwirkt, um das genannte erste Übertragungselement (52) entlang der genannten Hin- und Her-Richtung (Z) zu bewegen;
wobei das Übertragungselement (52) einen Kopplungskörper (7) umfasst, der geführt an dem genannten Stützkörper (2) angebracht ist und darauf montiert die genannte Interdentalbürste (6) trägt, **dadurch gekennzeichnet, dass** das Übertragungselement (52) zudem einen Kipphebel (8) umfasst, der an dem genannten Stützkörper (2) schwenkbar gelagert und mit Folgendem ausgestattet ist:
- einem ersten Hebelarm (81), der mechanisch mit der genannten Exzentervorrichtung (51) verbunden ist und auf dem der erste Gehäusesitz (520) ausgeführt ist;
- einem zweiten Hebelarm (82), der mechanisch mit dem Kopplungskörper (7) verbunden ist.

2. Vorrichtung nach Anspruch 1, **dadurch gekennzeichnet, dass** der zweite Hebelarm (82) des genannten Kipphebels (8) ein Eingriffsteil (820) umfasst, das zum genannten Kupplungskörper (7) zeigt, und dass der genannte Kupplungskörper (7) zwei radiale Ansätze (71, 72) umfasst, die zwischen einander einen zweiten Gehäusesitz (70) definieren,
der zwischen den genannten radialen Ansätzen (71, 72) entlang einer im Wesentlichen parallel zur Hin- und Her-Richtung (Z) verlaufenden Richtung verläuft;
wobei das Eingriffsteil (820) des genannten zweiten Hebelarms (82) zumindest teilweise in den genannten zweiten Gehäusesitz (70) greift, um den genannten Kopplungskörper (7) und die genannte Interdentalbürste (6) entlang der genannten Hin- und Her-Richtung (Z) zu bewegen.

3. Vorrichtung nach Anspruch 1 oder 2, **dadurch gekennzeichnet, dass** die genannte Exzentervorrichtung (51) Mittel zur Untersetzung des Übersetzungsverhältnisses (9) umfasst, die mechanisch mit dem genannten Übertragungselement (52) verbunden sind, um die Übersetzungsfrequenz der genannten Interdentalbürste (6) entlang der genannten Hin- und Her-Richtung (Z) zu reduzieren.

4. Vorrichtung nach Anspruch 3, **dadurch gekennzeichnet, dass** die genannte Exzentervorrichtung (51) ein Exzenterelement (500) umfasst, das zwischen der genannten Rotorwelle (31) und dem genannten Mittel zur Untersetzung des Übersetzungsverhältnisses (9) angeordnet und mit einem zweiten Exzenterstift (510) versehen ist, der mechanisch mit dem Mittel zur Untersetzung des Übersetzungsverhältnisses (9) verbunden ist.

5. Vorrichtung nach Anspruch 4, **dadurch gekennzeichnet, dass** die Mittel zur Untersetzung des Übersetzungsverhältnisses (9) Folgendes umfassen:
- mindestens ein Zahnrad (90), auf dem der genannte erste Exzenterstift (901) angebracht ist und das mit einer Übertragungsverzahnung (900) versehen ist;
- mindestens ein Stützelement (91), das fest mit dem genannten Stützkörper (2) verbunden und mit einem Drehstift (910) versehen ist;
- mindestens einen Reduzierkörper (92), ausgestattet mit:
- einem ersten Einsteckloch (920), in dem der zweite Exzenterstift (510) des genannten Exzenterelements (500) zumindest teilweise untergebracht ist;
- einem zweiten Einsteckloch (921), in dem der Drehstift (910) des genannten Stützelements (91) zumindest teilweise untergebracht ist und das eine Drehachse des genannten Reduzierkörpers (92) definiert; und
- ein Eingriffselement (93), das entlang einer im Wesentlichen parallel zur ersten Drehachse (X) verlaufenden Richtung vorsteht und so angeordnet ist, dass es in die Übertragungsverzahnung (900) des genannten Zahnrads (90) eingreift, um es zu drehen;
wobei das genannte erste Einsteckloch (920) in einem ersten Abstand (D1) vom genannten zweiten Einsteckloch (921) platziert ist und das genannte Eingriffselement (93) in einem zweiten Abstand (D2) vom genannten zweiten Einsteckloch (921) platziert ist, der größer als der erste Abstand (Dl) ist, um die Winkelbewegung zu erhöhen, die das genannte Eingriffselement (93) in Bezug auf den genannten zweiten Exzenterstift (510) ausführt.

6. Vorrichtung nach Anspruch 5, **dadurch gekennzeichnet, dass** das genannte Zahnrad (90) mit einer Blockierverzahnung (902) ausgestattet ist, die auf einer der Übertragungsverzahnung (900) gegenüberliegenden Fläche angebracht ist, und dass die Bewegungsumwandlungsmittel (5) ein Stoppelement (53) umfassen, das mit dem genannten Stützkörper (2) verbunden und mit mindestens einem Stoppabschnitt versehen ist, der mit einem der Zähne der genannten Blockierverzahnung (902) zusammenwirken kann, um die Drehung des genannten Zahnrads (90) in einer zweiten Drehrichtung zu verhindern.

7. Vorrichtung nach einem beliebigen der vorangegangenen Ansprüche, **dadurch gekennzeichnet, dass** der genannte Kipphebel (8) Zwangsmittel (83) umfasst, die so angeordnet sind, dass sie die weitere Bewegung der Interdentalbürste (6) entlang der Hin- und Her-Richtung (Z) durch die auf die genannte Interdentalbürste (6) einwirkenden Reaktionskräfte, die über einem voreingestellten Schwellenwert liegen, verhindern.

8. Vorrichtung nach Anspruch 7, **dadurch gekennzeichnet, dass** die genannten Zwangsmittel (83) eine Rückstellfeder (830) umfassen, die zwischen dem genannten ersten Hebelarm (81) und dem genannten zweiten Hebelarm (82) angeordnet ist, um eine elastische Kraft auf den genannten ersten Hebelarm (81) und den genannten zweiten Hebelarm (82) auszuüben und den genannten ersten Hebelarm (81) und den genannten zweiten Hebelarm (82) drehfest miteinander zu verbinden; wobei die genannte Rückstellfeder (830) so konfiguriert ist, dass der genannte erste Hebelarm (81) und der genannte zweite Hebelarm (82) durch Reaktionskräfte, die höher als die elastische Kraft sind, voneinander gelöst werden.

## Revendications

1. Dispositif de nettoyage dentaire, comprenant :
- un corps de support (2), qui s'étend dans un sens de développement principal (Y) et définit un premier volume de stockage (20) à l'intérieur ;
- un moteur électrique, situé à l'intérieur du premier volume de stockage (20) dudit corps de support (2) et comprenant un arbre de rotor (31), actionnable pour tourner autour d'un premier axe de rotation (X) ;
- une unité de nettoyage dentaire (4), comprenant :
- une brosse interdentaire (6) raccordée audit arbre de rotor (31) de manière à être déplacée par un mouvement rectiligne oscillatoire dans un sens de va-et-vient (Z) ;
- des moyens de transformation du mouvement (5), logés dans ledit corps de support (2), intercalés entre ledit arbre de rotor (31) et ladite brosse interdentaire (6) de manière à transformer le mouvement de rotation dudit moteur électrique en un mouvement rectiligne oscillatoire de ladite brosse interdentaire (6), lesdits moyens de transformation du mouvement (5) comprenant :
- au moins un dispositif excentrique (51), raccordé mécaniquement à l'arbre de rotor (31) dudit moteur électrique, et comprenant au moins une première goupille excentrique (901) s'étendant dans un sens essentiellement parallèle audit premier axe de rotation (X) ; et
- un élément de transmission (52), fixé audit corps de support (2) et raccordé mécaniquement audit dispositif excentrique (51) et à ladite brosse interdentaire (6) de manière à déplacer ladite brosse interdentaire (6) dans ledit sens de va-et-vient (Z) ; ledit élément de transmission (52) comprenant au moins un premier siège de logement (520), dans lequel ladite première goupille excentrique (901) est au moins partiellement logée, et ledit siège de logement (520) s'étendant dans un sens essentiellement parallèle audit sens de va-et-vient (Z) entre une première paroi de butée (520') et une seconde paroi de butée (520"), contre lesquelles ladite première goupille excentrique (901) agit de manière à déplacer ledit premier élément de transmission (52) dans ledit sens de va-et-vient (Z) ;
dans lequel l'élément de transmission (52) comprend un corps d'accouplement (7), monté de manière guidée sur ledit corps de support (2) et sur lequel est montée ladite brosse interdentaire (6), **caractérisé en ce que** l'élément de transmission (52) comprend également un bras oscillant (8), pivotant par rapport audit corps de support (2) et pourvu de :
- un premier bras de levier (81) raccordé mécaniquement audit dispositif excentrique (51) et sur lequel se trouve ledit premier siège de logement (520) ;
- un second bras de levier (82), raccordé mécaniquement audit corps d'accouplement (7).

2. Dispositif selon la revendication 1, **caractérisé en ce que** le second bras de levier (82) dudit bras oscillant (8) comprend une partie d'enclenchement (820), orientée vers ledit corps d'accouplement (7), et ledit corps d'accouplement (7) comprend deux épaulements radiaux (71, 72) qui définissent entre eux un second siège de logement (70),
s'étendant entre lesdits épaulements radiaux (71, 72) dans un sens essentiellement parallèle audit sens de va-et-vient (Z) ;
la partie d'enclenchement (820) dudit second bras de levier (82) s'enclenchant au moins partiellement audit second siège de logement (70) de manière à déplacer ledit corps d'accouplement (7) et ladite brosse interdentaire (6) dans ledit sens de va-et-vient (Z).

3. Dispositif selon la revendication 1 ou 2, **caractérisé en ce que** ledit dispositif excentrique (51) comprend des moyens de réduction du rapport de transmission (9), raccordés mécaniquement audit élément de transmission (52) de manière à réduire la fréquence de déplacement de ladite brosse interdentaire (6) dans le sens de va-et-vient (Z).

4. Dispositif selon la revendication 3, **caractérisé en ce que** ledit dispositif excentrique (51) comprend un élément excentrique (500), intercalé entre ledit arbre de rotor (31) et lesdits moyens de réduction du rapport de transmission (9) et pourvu d'une seconde goupille excentrique (510), raccordée mécaniquement auxdits moyens de réduction du rapport de transmission (9).

5. Dispositif selon la revendication 4, **caractérisé en ce que** lesdits moyens de réduction du rapport de transmission (9) comprennent :
- au moins une roue dentée (90), sur laquelle se trouve ladite première goupille excentrique (901) et qui est pourvue d'une pluralité de dents de transmission (900);
- au moins un élément de support (91), intégré audit corps de support (2) et pourvu d'une goupille de rotation (910) ;
- au moins un corps de réducteur (92) pourvu de :
- un premier trou d'insertion (920), dans lequel la seconde goupille excentrique (510) dudit élément excentrique (500) est au moins partiellement logée ;
- un second trou d'insertion (921), dans lequel la goupille de rotation (910) dudit élément de support (91) est au moins partiellement logée et définit un axe de rotation dudit corps de réducteur (92), et
- un élément d'enclenchement (93), faisant saillie dans un sens essentiellement parallèle audit premier axe de rotation (X) et disposé pour s'enclencher dans les dents de transmission (900) de ladite roue dentée (90) de manière à la faire tourner ;
ledit premier trou d'insertion (920) étant placé à une première distance (Dl) dudit second trou d'insertion (921) et ledit élément d'enclenchement (93) étant placé à une seconde distance (D2) dudit second trou d'insertion (921), plus grande que ladite première distance (Dl) de manière à augmenter le mouvement angulaire réalisé par ledit élément d'enclenchement (93) par rapport à ladite seconde goupille excentrique (510).

6. Dispositif selon la revendication 5, **caractérisé en ce que** ladite roue dentée (90) est pourvue d'une pluralité de dents de blocage (902), sur une face opposée à celle où se trouvent lesdites dents de transmission (900), et lesdits moyens de transformation du mouvement (5) comprennent un élément d'arrêt (53), raccordé audit corps de support (2) et pourvu d'au moins une section d'arrêt susceptible de coopérer avec l'une desdites dents de blocage (902) de manière à éviter la rotation de ladite roue dentée (90) dans un deuxième sens de rotation.

7. Dispositif selon l'une quelconque des revendications précédentes, **caractérisé en ce que** ledit bras oscillant (8) comprend des moyens de contrainte (83), disposés de manière à éviter tout autre mouvement de ladite brosse interdentaire (6) dans ledit sens de va-et-vient (Z) en raison de forces de réaction agissant sur ladite brosse interdentaire (6) supérieures à une valeur seuil prédéfinie.

8. Dispositif selon la revendication 7, **caractérisé en ce que** lesdits moyens de contrainte (83) comprennent un ressort de retour (830), intercalé entre ledit premier bras de levier (81) et ledit second bras de levier (82) de manière à exercer une force élastique sur ledit premier bras de levier (81) et ledit second bras de levier (82) et rendre solidaire en rotation ledit premier bras de levier (81) et ledit second bras de levier (82) ; ledit ressort de retour (830) étant configuré pour libérer ledit premier bras de levier (81) et ledit second bras de levier (82) l'un de l'autre en raison de forces de réaction supérieures à ladite force élastique.
